# EUROPEAN PATENT APPLICATION

(11) **EP 4 635 600 A1**
(43) Date of publication of application: **22.10.2025**
(21) Application number: 25161150.5
(22) Date of filing: 28.02.2025
(51) Int. Cl.: B01D 53/04

(54) **ATMOSPHERIC CO2 REMOVAL SYSTEM**

(30) Priority: 01.03.2024 GB 202403467; 10.09.2024 GB 202413258; 12.09.2024 GB 202413400; 18.09.2024 GB 202413727; 09.10.2024 GB 202414866; 10.10.2024 GB 202414937
(71) Applicant: Sagentia Ltd, Cambridgeshire CB22 7GG (GB); Cohen, Mark Joseph, Cambridge CB22 7GG (GB)
(72) Inventor: COHEN, MARK JOSEPH, CAMBRIDGE, CB22 7GG (GB); POTTER, ANDREW ROBERT, CAMBRIDGE, CB22 7GG (GB); BYRNE, LOUISE ANNE, CAMBRIDGE, CB22 7GG (GB); LOWDELL, CHRISTOPHER, CAMBRIDGE, CB22 7GG (GB); MILLINGTON, ROGER BRADLEY, CAMBRIDGE, CB22 7GG (GB)
(74) Representative: Mathys & Squire

(57) **Abstract**

The present invention relates to a system comprising a plurality of air purification circuits, an air purification circuit for a system for purification of air, a method of removing CO₂ from air using the system of the present invention, a method of retrofitting the system or circuit of the present invention into a submarine, and a submarine comprising the system or circuit of the present invention. In a specific aspect, the system comprising a plurality of air purification circuits, the system comprising: a common pollutant outlet, a common clean air outlet; and a common inlet; wherein each air purification circuit comprises an absorption/desorption comprising a solid or porous absorption media, wherein each circuit comprises one or more valves which allow fluid communication between the absorption/desorption tank and each one of the common inlet, the common pollutant outlet, and the common clean air outlet to be either opened or closed.

## Description

### FIELD OF THE INVENTION

The present invention relates to a system for the purification of air, for example, by removing pollutants such as CO₂. In particular, the present invention relates to a system comprising a plurality of air purification circuits, an air purification circuit for a system for purification of air, a method of removing CO₂ from air using the system of the present invention, a method of retrofitting the system or circuit of the present invention into a submarine, and a submarine comprising the system or circuit of the present invention.

### BACKGROUND OF THE INVENTION

In a submarine environment, it is critical to remove carbon dioxide (CO₂) from the atmospheric air to ensure the safety and wellbeing of the submarine crew. Current systems rely on direct liquid-air contactors where CO2 from the air dissolves into the absorber liquid. Although current technology is proven, atmospheric quality in submarines is usually suboptimal with higher than desired levels of CO₂. Therefore, there is a need for improved CO₂ scrubbing technologies to reduce the level of ambient CO₂, particularly for long duration submarine voyages. It is an object of this invention to provide a technology which is more effective at removing CO₂ from the atmosphere than the existing legacy technologies stated above. It is a further object of this invention to provide an improved CO₂ scrubbing technology which can be retrofitted to existing submarine atmospheric control systems. Depending on the active chemistry used, the CO₂ binding process may be absorption, adsorption, dissolution or other molecular process. For the purposes of simplicity, this document will refer to absorption, however this should not be read as limiting the document to this specific process as the principles of the invention apply to any molecular process. Solid CO₂ absorbers operating in a pressure-swing system configuration are a promising technology for air scrubbing, but suffer from some limitations. One limitation is that in order to provide continuous air scrubbing the system must maintain part of the system in 'absorb' mode and another part in 'desorb mode', effectively meaning that large parts of the system must be duplicated. This is space inefficient and physical space is at a premium on a submarine. If absorb rates and desorb rates are dissimilar, then this problem is exacerbated, as the system must be sized to accommodate the slowest process. In addition, key to many submarine operations is the ability to operate with the minimum acoustic noise possible, in order to avoid detection. Addition of extra mechanical systems (e.g. pumps, valves) add to this noise burden, regardless of how quiet they might be. The present invention uses existing submarine systems which are already optimised for silent operation.

The present invention combines existing submarine systems which are already optimised for silent operation along with heaters / heat exchangers which can be made to operate silently. System topologies which may use vacuum to assist with desorption has been filed in UK patent applications GB2413727.5, GB 2414937.9 and GB2403467.0, the entirety of which is incorporated by reference herein.

System topologies using vacuum and heat to assist with desorption have been filed in UK patent applications GB2403467.0 and GB2413258.1, the entirety of which are incorporated by reference herein. The present invention incorporates these topologies in a complete, managed air purification system.

Alternative system topologies have been filed in UK patent applications GB2403467.0, GB2413258.1 and GB2413400.9, the entirety of which are incorporated by reference herein. These topologies will increase the efficiency of CO₂ removal and allow for balancing between a network of air purification circuits. These systems have the drawback of having a failure mode which may allow foul air to enter the clean air output if absorber capacity is insufficient to remove all the pollutant from the input foul air. The invention presented in the current patent application addresses this shortcoming.

Alternative system topologies have been filed in UK patent applications GB2403467.0, GB2413258.1 and GB2413400.9, the entirety of which are incorporated by reference herein. These topologies will increase the efficiency of CO₂ removal and allow for balancing between a network of air purification circuits. The current patent application builds on the materials in these prior patent applications by allowing the system to isolate specific air purification circuits according to air purification, maintenance or other operational demands.

Alternative system topologies have been filed in UK patent application GB2414866.0 the entirety of which is incorporated by reference herein. These topologies will increase the efficiency of CO₂ removal using a secondary circulation loop.

The current patent application builds on the materials in these patent applications by introducing a secondary circulation loop which will maximise contact between the foul air and the absorber, hence further increasing absorber efficiency.

### SUMMARY OF THE INVENTION

This invention is a system-level innovation to take advantage of the already on-board and operating 'solution pump' on a submarine. This solution pump provides a source of vacuum which can be utilised by the scrubber system to improve efficiency, thereby reducing system size for a given scrubbing load.

Making use of existing mechanical systems (the solution pump) also means that fewer mechanical components are needed. Utilisation of the vacuum system already present and running on a submarine allows this system to be implemented without minimal additional cost, volume or energy burden onto the scrubber system. This invention is a system-level innovation to use waste heat from the submarine's systems alongside the submarine's 'solution pump' which provides a source of vacuum. The use of heat and vacuum can be utilised by the scrubber system to improve efficiency, thereby reducing system size for a given scrubbing load.

Making use of existing mechanical systems (heat: combustion and electrical engines, reactor; vacuum: solution pump) also means that fewer additional mechanical components are needed. Use of waste heat and utilisation of the vacuum system already present and running on a submarine allows this system to be implemented with minimal additional cost, volume or energy burden onto the scrubber system. Heat and/or reduced pressure will promote the removal of unwanted species that are bound to the active chemistry. For example, water molecules in the incoming air stream may bind to absorption sites, limiting capacity for CO₂ absorption. These unwanted molecules can then persist throughout the absorption/desorption cycles reducing capacity for multiple system cycles.

The invention comprises one or more air purification circuits. In the context of the present invention the term "circuit" refers to a system of pipes through which air can flow, an air purification circuit must comprise a means for air purification, in this case a solid or porous absorption media. Each circuit can operate in one of four or more modes including: absorption mode, where foul air has pollutants removed from it; clean air discharge mode, where the purified air is released; desorb mode where pollutants are removed from the air purification circuit; and isolated mode where the circuit is isolated from the overall air purification system A fifth mode, flow-through, is possible for some embodiments of these circuits. A sub-mode, dwell, may be used during absorption mode to make optimal use of the absorption media.

As well as utilising the on-board vacuum systems, available sources of heat and cooling may optionally also be used in this invention.

Optionally, the system may monitor the level of CO₂ in the air within the absorption tank. When the level of CO₂ falls to an acceptable level, the cleaned air is released and the absorption tank repressurised with new foul air.

Optionally, the system also measures the loading of the selected absorption media and switches to desorption when the absorption media is no longer removing sufficient CO₂; predictive methods may be used to ensure that the circuit switches to desorption mode before taking in foul air which it does not have the capacity to clean.

Through the use of a pressurised absorber tank and monitoring both the level of CO₂ in the air and the absorption media loading, the useful absorption time per circuit can be increased to be significantly longer than the time required for the desorption cycle.

Examples are given using one, two and three air purification circuits, however these should not be read as limitations as to the number of circuits in any implementation.

The invention comprises a method, or system improvements and supporting methods for dealing with saturated or failing absorber in the system described in patent application GB2413400.9 the entirety of which is incorporated by reference.

UK patent application GB2413400.9 the entirety of which is incorporated by reference discusses the normal operation of multiple embodiments of the system. The present patent application relates to the anomalous situation when an absorber is unable to remove sufficient pollutant from the foul air in its corresponding absorption/desorption tank.

When removing pollutant from foul air, the absorption/desorption tank is pressurised with foul air and the absorber removes pollutants from this foul air. Under normal operating conditions, the absorber will be able to remove sufficient pollutant from the foul air to allow the cleaned air to be used in the intended manner. Under atypical circumstances, such as the absorber's capacity being reduced due to age or excessive duty cycles, or foul air carrying an excessive amount of pollutant, it is possible that the absorber may not be able to remove sufficient pollutant from the foul air to allow it to be used in the intended manner.

Should the absorber capacity be insufficient to clean the foul air to an acceptable level, then ideally the partially cleaned foul air should be routed back to the foul air input to allow cleaning by an alternative air purification circuit.

There are combinations of topologies for the air purification systems as set out in patent application GB2413400.9, the entirety of which is incorporated by reference. These topologies vary by number of input/output channels to the absorption/desorption tank, the valving arrangements and whether pumps are shared between circuits.

For topologies where each circuit has its own foul air input pump, the object of the current invention may be achieved by reversing the flow of this pump or replacing this pump by a combination of pressure pumps, compression pumps, and vacuum pumps with an appropriate valve/switch arrangement.

For topologies where pumps are shared, the object of this invention may be achieved by alternative/additional valve and pump arrangements.

In some embodiments, the invention comprises an additional channel to each of the circuits set out in the patent applications herein, the entirety of which are incorporated by reference. This channel links the outlet of the absorption/desorption tank back to the foul air input line, allowing partially cleaned foul air to transfer from the absorption/desorption tank back to the foul air input line, allowing it to be cleaned by alternative air purification circuit(s).

In alternative embodiments, the functionality is achieved using valve and pump settings which direct the partially cleaned air back to the foul air input line, allowing it to be cleaned by alternative air purification circuit(s).

Some examples are given using three or four air purification circuits. Aside from a minimum requirement of two circuits in some cases for this absorption/desorption tank fallback to operate, the use of three circuits in the examples should not be read as a limitation as to the number of circuits in any implementation.

Optionally, the system may monitor the level of CO₂ in the air within the absorption tank. When the level of CO₂ falls to an acceptable level, the cleaned air is released and the absorption tank repressurised with new foul air. Optionally, the system also measures the loading of the selected absorption media and switches to desorption when the absorption media is no longer removing sufficient CO₂; predictive methods may be used to ensure that the circuit switches to desorption mode before taking in foul air which it does not have the capacity to clean. Through the use of a pressurised absorber tank and monitoring both the level of CO₂ in the air and the absorption media loading, the useful absorption time per circuit can be increased to be significantly longer than the time required for the desorption cycle.

This patent application further provides the use of inactive mode to alter the system's air purification capacity in response to changing demands. Variations in air purification demand may be due to reasons including number of crew on board, maintenance requirements and installation requirements.

Each air purification circuit may include a secondary circulation loop, comprising secondary circulation inlets and outlets, a secondary circulation line and a secondary circulation pump. During absorption mode or dwell mode, the absorption/desorption tank is pressurised with foul air and pollutants bind to the absorber. When pressurised, however, there may be insufficient movement of the pressurised foul air leading to the formation of a depleted boundary layer between the foul air and the absorber. To address this, foul air can be pumped from one part of the absorption/desorption tank to another using a secondary circulation loop; this will have the effect of creating pressurised or disrupted foul airflow over the absorber thereby increasing the overall level of contact between the foul air and the absorber.

In a first aspect, the present invention relates to a system comprising a plurality of air purification circuits, the system comprising: a common pollutant outlet, a common clean air outlet; and a common inlet; wherein each air purification circuit comprises an absorption/desorption tank comprising a solid or porous absorption media, wherein each circuit comprises one or more valves which allow fluid communication between the absorption/desorption tank and each one of the common inlet, the common pollutant outlet, and the common clean air outlet to be either opened or closed.

In a second aspect, the present invention relates to an air purification circuit comprising:
a) an absorption/desorption tank comprising a solid or porous absorption media and a secondary circulation loop comprising a first pressure chamber inlet/outlet, a second pressure chamber inlet/outlet, a secondary circulation line and a secondary circulation pump;
b) a pollutant outlet, a clean air outlet, and an inlet; and
c) one or more valves which allow fluid communication between the absorption/desorption tank and each one of the inlet, the pollutant outlet, and the clean air outlet to be either opened or closed.

In a third aspect, the present invention relates to system comprising a plurality of air purification circuits according the second aspect, the system comprising: a common pollutant outlet, a common clean air outlet, and a common inlet; and wherein the pollutant outlet, clean air outlet, and inlet of each circuit are suitable for fluid communication with the common pollutant outlet, the common clean air outlet, and the common inlet, respectively.

In a fourth aspect, the present invention relates to a method of removing CO₂ from air using a system as defined herein, wherein each air purification circuit is operated in one of the following modes:
a) absorption mode: wherein fluid communication from the common inlet to the absorption/desorption tank is open; fluid communication from the absorption/desorption tank to the common clean air outlet is closed; and fluid communication from the absorption/desorption tank to the common pollutant outlet is closed;
b) desorption mode: wherein fluid communication from the common inlet to the absorption/desorption tank is closed; fluid communication from the absorption/desorption tank to the common clean air outlet is closed; and fluid communication from the absorption/desorption tank to the common pollutant outlet is open;
c) clean air discharge mode: wherein fluid communication from the common inlet to the absorption/desorption tank is closed; fluid communication from the absorption/desorption tank to the common clean air outlet is open; and fluid communication from the absorption/desorption tank to the common pollutant outlet is closed;
d) isolated mode: wherein fluid communication from the common inlet to the absorption/desorption tank is closed; fluid communication from the absorption/desorption tank to the common clean air outlet is closed; and fluid communication from the absorption/desorption tank to the common pollutant outlet is closed;
e) flow through mode: wherein fluid communication from the common inlet to the absorption/desorption tank is open; fluid communication from the absorption/desorption tank to the common clean air outlet is open; and fluid communication from the absorption/desorption tank to the common pollutant outlet is closed; or
f) dwell mode: wherein fluid communication from the common inlet to the absorption/desorption tank is closed; fluid communication from the absorption/desorption tank to the common clean air outlet is closed; and fluid communication from the absorption/desorption tank to the common pollutant outlet is closed, and wherein the pressure inside the absorption/desorption tank is higher than atmospheric pressure.

In a fifth aspect, the present invention relates to a method of retrofitting a system as defined in herein, or a circuit as defined herein, into a submarine atmospheric control system.

In a sixth aspect, the present invention relates to a submarine comprising one or more system as defined herein, or one or more circuit as defined herein.

### BRIEF DESCRIPTION OF THE FIGURES

Figure 1 shows a system comprising two air purification circuits, labelled the A-circuit and B-circuit. The A-circuit is in absorption mode and the B-circuit is in desorption mode.
Figure 2 shows the system from Figure 1 with the B-circuit in absorption mode and the A-circuit in desorption mode.
Figure 3 shows a system comprising two air purification circuits, wherein each air purification circuit comprises a heat exchanger, the circuits are labelled the A-circuit and B-circuit. The A-circuit is in absorption mode and the B-circuit is in desorption mode.
Figure 4 shows the system from Figure 1 with the B-circuit in absorption mode and the A-circuit in desorption mode.
Figure 5 shows a single air purification circuit in absorption mode.
Figure 6 shows the single air purification circuit from Figure 5 in clean air discharge mode.
Figure 7 shows the single air purification circuit from Figures 6 and 7 in desorb mode.
Figure 8 shows an alternative embodiment of a single air purification circuit.
Figure 9 shows a further alternative embodiment of a single air purification circuit.
Figure 10 shows three interconnected air purification circuits.
Figure 11 shows three interconnected air purification circuits.
Figure 12 shows three interconnected air purification circuits.
Figure 13 shows a single air purification circuit in flow-through mode.
Figure 14 shows a single air purification circuit in flow-through mode.
Figure 15 shows an alternative embodiment of Figure 10 with an alternative pump arrangement.
Figure 16 shows an alternative embodiment of Figure 11 with an alternative pump arrangement.
Figure 17 shows an alternative embodiment of Figure 12 with an alternative pump arrangement.
Figure 18 shows a single air purification circuit in dwell mode.
Figure 19 shows a single air purification circuit in dwell mode.
Figure 20 shows a single air purification circuit in dwell mode.
Figure 21 shows an alternative embodiment of an air purification circuit.
Figure 22 shows three interconnected air purification circuits.
Figure 23 shows an alternative embodiment of Figure 22 with an alternative pump arrangement.
Figure 24 shows a valve and pump arrangement which allows dual direction flow.
Figure 25 shows a second valve and pump arrangement which allows dual direction flow.
Figure 26 shows a second valve and pump arrangement which allows dual direction flow.
Figure 27 shows three interconnected air purification circuits with the a-circuit being in fallback mode.
Figure 28 shows three interconnected air purification circuits with the a-circuit being in fallback mode.
Figure 29 shows three interconnected air purification circuits with the a-circuit being in fallback mode.
Figure 30 shows three interconnected air purification circuits with the a-circuit being in fallback mode.
Figure 31 shows three interconnected air purification circuits with the a-circuit being in fallback mode.
Figure 32 shows three interconnected air purification circuits with the a-circuit being in fallback mode.
Figure 33 shows three interconnected air purification circuits with the a-circuit being in fallback mode.
Figure 34 shows three interconnected air purification circuits with the a-circuit being in fallback mode.
Figure 35 shows three interconnected air purification circuits.
Figure 36 shows three interconnected air purification circuits.
Figure 37 shows three interconnected air purification circuits.
Figure 38 shows an alternative embodiment of Figure 35 with an alternative pump arrangement.
Figure 39 shows an alternative embodiment of Figure 36 with an alternative pump arrangement.
Figure 40 shows an alternative embodiment of Figure 37 with an alternative pump arrangement.
Figure 41 shows three interconnected air purification circuits.
Figure 42 shows an alternative embodiment of Figure 41 with an alternative pump arrangement.
Figure 43 shows a single air purification circuit in absorption mode.
Figure 44 shows a single air purification circuit in absorption mode.
Figure 45 shows a single air purification circuit in absorption mode.
Figure 46 shows three interconnected air purification circuits.
Figure 47 shows three interconnected air purification circuits.
Figure 48 shows three interconnected air purification circuits.
Figure 49 shows an alternative embodiment of Figure 46 with an alternative pump arrangement.
Figure 50 shows an alternative embodiment of Figure 47 with an alternative pump arrangement.
Figure 51 shows an alternative embodiment of Figure 48 with an alternative pump arrangement.
Figure 52 shows a single air purification circuit in dwell mode.
Figure 53 shows a single air purification circuit in dwell mode.
Figure 54 shows a single air purification circuit in dwell mode.
Figure 55 shows a single air purification circuit.
Figure 56 shows three interconnected air purification circuits.
Figure 57 shows an alternative embodiment of Figure 56 with an alternative pump arrangement.
Figure 58 shows an alternative embodiment of Figure 43 with an internal secondary circulation loop.

### DETAILED DESCRIPTION OF THE INVENTION

In a first aspect, the present invention relates to a system comprising a plurality of air purification circuits, the system comprising: a common pollutant outlet, a common clean air outlet; and a common inlet; wherein each air purification circuit comprises an absorption/desorption tank comprising a solid or porous absorption media, wherein each circuit comprises one or more valves which allow fluid communication between the absorption/desorption tank and each one of the common inlet, the common pollutant outlet, and the common clean air outlet to be either opened or closed.

Whilst the primary use of this system is for CO₂ removal from air, it may be used to remove other pollutants, the term "pollutants" as used herein includes CO₂. The term "air purification" is understood to include the removal of pollutants, such as CO₂.

The system comprises a plurality of air purification circuits, for example 2 or 3, 4, 5, 6, 7, 8, 9, 10, 15, 20, 30, 40, 50, or 100. Although there is no upper limit to the number of air purification circuits, for example at least 2, at least 3, at least 5, at least 10, at least 20, at least 50, or at least 100.

In the context of the present invention, a "common" outlet or inlet refers to an outlet or inlet that is shared, and is therefore suitable for fluidic communication with one or more air purification circuit. As would be appreciated, in the context of the present invention, an "inlet" is an opening into which air to be purified may flow. Air to be purified may enter the common inlet from the atmosphere outside the system, such as the cabin of a submarine, and may then flow into one or more air purification circuits to be purified. As would be appreciated, in the context of the present invention, an "outlet" is an exit out of which purified air, or a pollutant stream may flow. Purified air may flow from the absorption/desorption tank into the atmosphere outside the system, such as the cabin of a submarine. Pollutants, such as CO₂, which have been removed from the air, may flow from the absorption/desorption tank into a waste storage system. Preferably, the system may further comprise a means for waste storage suitable for fluid communication with the common pollutant outlet.

The absorption/desorption tank comprises a solid or porous absorption media. The solid or porous absorption media may be a CO₂ removing material. The solid or porous absorption media may be a Metal-Organic Framework (MOF), a solid amine, covalent organic framework, a polymer-based absorber, or other suitable pollution absorbing material. For example, the solid amine may be polyethyleneimine, a melamine based resin, or amine functionalised silica. For example, the solid or porous absorption media may be a hydroxide base, such as sodium hydroxide, potassium hydroxide, lithium hydroxide, or calcium hydroxide. The absorption/desorption tank may further comprise a mechanism to encourage or disrupt airflow across or through the absorption media, for example a fan or baffles within absorption/desorption tank.

A valve is a device that controls the flow of fluids within a pipe system, such as an air purification circuit, by opening or closing passageways. A valve may be present within a linear passageway in which case it may be either open or close the passageway. A valve may also be present at a convergence between multiple passageways, in which case the valve may provide various configurations of where fluid communication between said passageways are opened or closed.

In an air purification circuit which forms part of the system defined herein, fluid communication between the absorption/desorption tank and each one of the common inlet, the common pollutant outlet, and the common clean air outlet may be achieved using by various embodiments using passageways and valves. Preferably, two separate valves are used to open/close fluid communication from the inlet to the absorption/desorption tank and from the absorption/desorption tank to the outlet.

In a first embodiment, one or more of, or each of, the air purification circuits comprise the following features: the absorption/desorption tank comprises: a passageway to the common inlet, the passageway comprising an inlet valve; a passageway to the common pollutant outlet, the passageway comprising a pollutant outlet valve; and a passageway to the common clean air outlet, the passageway comprising an outlet valve. This arrangement allows for each passageway to be independently open or closed depending on the configuration of the relevant valve.

In a second embodiment, one or more of, or each of, the air purification circuits comprise the following features: the absorption/desorption tank comprises: a passageway to the common inlet, the passageway comprising an inlet valve; and a shared passageway that divides into a passageway to the common pollutant outlet and a passageway to the common clean air outlet. The inlet valve may be open or closed in order to open or close the passageway from the common inlet to the absorption/desorption tank. The shared passageway that divides into a passageway to the common pollutant outlet and a passageway to the common clean air outlet comprises a shared outlet valve at the point of convergence. The position of the shared outlet valve therefore allows fluid communication out of the absorption/desorption tank to be directed to either the common pollutant outlet, the common clean air outlet, or to be closed. This means that the shared section of the passageway may be used for fluidic communication from the absorption/desorption tank to the common clean air outlet or to the common pollutant outlet depending on the configuration of the shared outlet valve. Thus, the shared outlet valve is selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet.

In a third embodiment, one or more of, or each of, the air purification circuits comprise the following features: the absorption/desorption tank comprises: a shared passageway that divides into a passageway to the common inlet, the common pollutant outlet, and the common clean air outlet. The shared passageway that divides into a passageway to the common inlet, a passageway to the common pollutant outlet, and a passageway to the common clean air outlet comprises a common valve at the point of convergence. The position of the common valve therefore allows fluid communication between the absorption/desorption tank to be directed to any one of the common inlet, the common pollutant outlet, the common clean air outlet, or to be closed. This means that the shared section of the passageway may be used for fluidic communication from the absorption/desorption tank to the common clean air outlet or to the common pollutant outlet, or may be used for fluid communication from the common inlet to the absorption/desorption tank, depending on the configuration of the common valve. Thus, the common valve is selectively configurable to:
i) open fluid communication from the absorption/desorption tank to the common clean air outlet, close fluid communication from the absorption/desorption tank to the common pollutant outlet, and close fluid communication from the common inlet to the absorption/desorption tank;
ii) close fluid communication from the absorption/desorption tank to the common clean air outlet, open fluid communication from the absorption/desorption tank to the common pollutant outlet, and close fluid communication from the common inlet to the absorption/desorption tank;
iii) close fluid communication from the absorption/desorption tank to the common clean air outlet, close fluid communication from the absorption/desorption tank to the common pollutant outlet, and open fluid communication from the common inlet to the absorption/desorption tank; or
iv) close fluid communication from the absorption/desorption tank to the common clean air outlet, close fluid communication from the absorption/desorption tank to the common pollutant outlet, and close fluid communication from the common inlet to the absorption/desorption tank.

In a fourth embodiment, one or more of, or each of, the air purification circuits comprise the following features: the absorption/desorption tank comprises: a shared passageway that divides into a passageway to the common inlet, and into a further shared pathway that divides into a passageway to the common pollutant outlet and a passageway to the common clean air outlet. The passageway to the common inlet comprises an inlet valve. The inlet valve may be open or closed in order to open or close the passageway from the common inlet to the absorption/desorption tank. The shared passageway that divides into a passageway to the common pollutant outlet and a passageway to the common clean air outlet comprises a shared outlet valve at the point of convergence. The position of the shared outlet valve therefore allows fluid communication out of the absorption/desorption tank to be directed to either the common pollutant outlet, the common clean air outlet, or to be closed. This means that the shared section of the passageway may be used for fluidic communication from the absorption/desorption tank to the common clean air outlet or to the common pollutant outlet, or may be used for fluid communication from the common inlet to the absorption/desorption tank, and the further shared section of the passageway may be used for fluidic communication from the absorption/desorption tank to the common clean air outlet or to the common pollutant outlet depending on the configurations of the two valve. Thus, the shared outlet valve is selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet.

The system of the present invention may comprise a plurality of air purification circuits, wherein each air purification circuit is an air purification circuit according to the first embodiment described above, the second embodiment described above, the third embodiment described above, or the fourth embodiment described above, alternatively a combination of these embodiments may be present. Any combination of air purification circuits using any suitable valve topology may be used.

The flow throughout the system, e.g. the flow of air to be purified from the inlet to the absorption/desorption tank, the flow of pollutants from the absorption/desorption tank to the common pollutant outlet, and the flow of clean air from the absorption/desorption tank to the common clean air outlet, may be provided by one or more pumps, such as pressure pumps, compressor pumps, or vacuum pumps. The one or more pumps may be part of the system, or the system may take advantage of pre-existing pumps. Common pumps may be comprised within common aspects of the system, for example, the common inlet may comprise a common inlet pump, such as a compressor pump or a pressure pump; the common pollutant outlet may comprise a common pollutant outlet pump, preferably a vacuum pump; and/or the common clean air outlet may comprise a common clean air outlet pump, preferably a vacuum pump. Alternatively or additionally, certain pumps may be comprised within one or more air purification circuit. Any of the pumps may be reversible pumps.

Preferably, the system comprises one or more pumps, wherein the one or more pumps are suitable for flowing air from the common inlet into one or more absorption/desorption tank, from one or more absorption/desorption tank into the common pollutant outlet, and/or from one or more absorption/desorption tank into the common clean air outlet; more preferably: i) the common inlet comprises a pump for flowing air from the common inlet into one or more absorption/desorption tank; ii) the common pollutant outlet comprises a pump for flowing air from one or more absorption/desorption tank into the common pollutant outlet; and/or iii) the common clean air outlet comprises a pump for flowing air from one or more absorption/desorption tank into the common clean air outlet.

In any of the first embodiment to the fourth embodiment described above, the passageway to the common inlet may comprise an inlet pump; the passageway to the common pollutant outlet may comprise an outlet pump; and/or the passageway to the common clean air outlet may comprise a clean air pump. The configuration of pumps may be the same or different in each circuit.

In the second or fourth aspect, additionally or alternatively to the outlet pump and/or clean air pump, the shared passageway or further shared passageway may comprise a shared pump which can act as an outlet pump or a clean air pump depending on the configuration of the shared outlet valve.

In the third or fourth aspect, additionally or alternatively to the inlet pump, outlet pump, and/or clean air pump, the shared passageway may comprise a shared pump which can act as an inlet pump, outlet pump, or a clean air pump depending on the configuration of the common valve.

In a specific embodiment, the system comprises two air purification circuits: wherein each circuit comprises an absorption/desorption tank comprising a solid or porous absorption media (preferably a solid CO₂ absorber), wherein each absorption/desorption tank is connected to the common pollutant outlet via a valve, each absorption/desorption tank is connected to the common clean air outlet via a valve, and each absorption/desorption tank is connected to the common inlet via a valve; and optionally wherein the common pollutant outlet comprises a pump, preferably a vacuum pump.

In a specific example of the first embodiment described above, each circuit comprises an inlet valve which allows fluid communication from the common inlet to the absorption/desorption tank to be open or closed, an outlet valve, which allows fluid communication from the absorption/desorption tank to the common clean air outlet to be open or closed, and a pollutant outlet valve which allows fluid communication from the absorption/desorption tank to the common pollutant outlet to be open or closed; and wherein the common pollutant outlet comprises a pump, preferably a vacuum pump, and the common inlet comprises a pump, preferably a pressure pump or a compression pump.

In a specific example of either the second or fourth embodiment described above, each circuit comprises an inlet valve which allows fluid communication from the common inlet to the absorption/desorption tank to be open or closed, and a shared outlet valve which is s selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet;
wherein the common inlet comprises a pump, preferably a pressure pump or a compression pump; and wherein either: the shared outlet valve is connected to the absorption/desorption tank via a pump, preferably a vacuum pump; or the common clean air outlet and the common pollutant outlet each comprise a pump; and optionally wherein each absorption/desorption tank is connected to a common absorption/desorption tank inlet/outlet which divides into connections to both the inlet valve and to the shared outlet valve.

In a specific example of the third embodiment described above, each absorption/desorption tank is connected to a common valve via a common pump; wherein the common valve is selectively configurable to:
i) open fluid communication from the absorption/desorption tank to the common clean air outlet, close fluid communication from the absorption/desorption tank to the common pollutant outlet, and close fluid communication from the common inlet to the absorption/desorption tank;
ii) close fluid communication from the absorption/desorption tank to the common clean air outlet, open fluid communication from the absorption/desorption tank to the common pollutant outlet, and close fluid communication from the common inlet to the absorption/desorption tank;
iii) close fluid communication from the absorption/desorption tank to the common clean air outlet, close fluid communication from the absorption/desorption tank to the common pollutant outlet, and open fluid communication from the common inlet to the absorption/desorption tank; or
iv) close fluid communication from the absorption/desorption tank to the common clean air outlet, close fluid communication from the absorption/desorption tank to the common pollutant outlet, and close fluid communication from the common inlet to the absorption/desorption tank.

Preferably, the air purification circuit comprises a fallback such that fluidic communication is possible from the absorption/desorption tank to the to the common inlet. This allows for any air that cannot be suitably purified within the absorption/desorption tank (for example if it is exhausted, contaminated, or otherwise rendered inactive) to be redirected to another absorption/desorption tank within the system. There are two possible architectures used to provide a fallback connection from the absorption/desorption tank to the to the common inlet.

One option for a fallback connection to the common inlet is that the connection from the absorption/desorption tank to the common inlet divides into an inlet branch and a fallback branch, wherein one or more valves is selectively configurable to open fluid communication from the inlet branch to the absorption/desorption tank and to close fluid communication from the absorption/desorption tank to the fallback branch, or vice versa, or to close both. Each of the inlet branch and the fallback branch may comprise a valve, or a valve may be positioned at a convergence point of the inlet branch and fallback branch. The inlet branch and the fallback branch may be in parallel without converging, or may converge from a shared passageway from the absorption/desorption tank and/or they may converge into a shared passageway to the common inlet.

In a specific embodiment, the connection from the absorption/desorption tank to the common inlet divides into an inlet branch and a fallback branch; wherein the inlet branch comprises an air inlet pump for pumping air from the common inlet to the absorption/desorption tank; wherein the fallback branch comprises a pump, preferably a vacuum pump, for pumping air from the absorption/desorption tank to the common inlet; and wherein one of:
a) each circuit comprises an inlet valve at the location where the connection from the absorption/desorption tank, the inlet branch, and the fallback branch converge, said inlet valve being selectively configurable to:
   i) open fluid communication from the inlet branch to the absorption/desorption tank, and to close fluid communication from the absorption/desorption tank to the fallback branch;
   ii) close fluid communication from the inlet branch to the absorption/desorption tank, and to open fluid communication from the absorption/desorption tank to the fallback branch; or
   iii) close fluid communication from the inlet branch to the absorption/desorption tank, and to close fluid communication from the absorption/desorption tank to the fallback branch;
b) each circuit comprises an inlet valve at the location where the common inlet, the inlet branch, and the fallback branch converge, said inlet valve being selectively configurable to:
   i) open fluid communication from the common inlet to the inlet branch and close fluid the fallback branch to the common inlet;
   ii) close fluid communication from the common inlet to the inlet branch and open fluid communication from the fallback branch to the common inlet; or
   iii) close fluid communication from the common inlet to the inlet branch and close fluid communication from the fallback branch to the common inlet; or
c) wherein the inlet branch comprises an inlet valve being selectively configurable to be either open or closed; and wherein the fallback branch comprises a fallback valve being selectively configurable to be either open or closed.

A second option for a fallback connection to the common inlet is a topology wherein the valve which connects the absorption/desorption tank to the common pollutant outlet, is further connected to the common inlet. This connection may be via a common fallback line with multiple circuits connected to the common fallback line. In this case, the valve allows for fluidic communication from the absorption/desorption tank to the common fallback line and in turn to the to the common inlet.

In a specific embodiment, one or more of the valves that are selectively configurable to open or close fluid communication from the absorption/desorption tank to the common pollutant outlet, are further selectively configurable to exclusively open fluid communication from the absorption/desorption tank to a common fallback line; wherein the common fallback line comprises a common fallback pump and a one-way fallback valve; and wherein the common fallback line flows into the common inlet.

Optionally, one or more of, preferably each of the absorption/desorption tanks comprise a heater and/or a cooler for heating or cooling the absorption media, for example a heat exchanger. A heat exchanger may function as either a heater or a cooler and may make use of pre-existing sources of heat or cooling on a submarine.

Optionally, one or more of, preferably each of the absorption media comprises an absorption media loading sensor configured to sense the loading of the absorption media and/or a sensor which detects or calculates pollutant loading on the selected absorption media. Optionally, one or more of, preferably each of the absorption/desorption tanks comprise a temperature sensor, an air quality sensor, and/or a pressure sensor. Optionally, the system further comprises a timer. Optionally, the system further comprises a control unit for controlling the valves and pumps. Preferably, the sensors and/or timer are configured for communication with the control unit, such that the control unit is able to switch the mode of a circuit within the system in response to input from the sensors and/or in response to by measured elapsed time.

Optionally, one or more of, preferably each of the absorption/desorption tanks further comprises a secondary circulation loop comprising a first pressure chamber inlet/outlet, a second pressure chamber inlet/outlet, a secondary circulation line and a secondary circulation pump. Preferably the secondary circulation pump is reversible. Each of the first and second pressure chamber inlet/outlet may act as the inlet or the outlet depending on the direction of the secondary circulation pump. Optionally, one or more of, preferably each of the absorption/desorption tanks further comprises one or more additional secondary circulation loop comprising an additional first pressure chamber inlet/outlet, an additional second pressure chamber inlet/outlet, an additional secondary circulation line and an additional secondary circulation pump.

In a second aspect, the present invention relates to an air purification circuit comprising: a) an absorption/desorption tank comprising a solid or porous absorption media and a secondary circulation loop comprising a first pressure chamber inlet/outlet, a second pressure chamber inlet/outlet, a secondary circulation line and a secondary circulation pump; b) a pollutant outlet, a clean air outlet, and an inlet; and c) one or more valves which allow fluid communication between the absorption/desorption tank and each one of the inlet, the pollutant outlet, and the clean air outlet to be either opened or closed.

The air purification according to the second aspect may be used in a system according to the first aspect, optionally all of the circuits may be a circuit according to the second aspect. Any of the embodiments and/or modifications described in relation to one or more air purification circuit useful in the first aspect may also be applied to the air purification circuit of the aspect.

In a third aspect, the present invention relates to system comprising a plurality of air purification circuits according the second aspect, the system comprising: a common pollutant outlet, a common clean air outlet, and a common inlet; and wherein the pollutant outlet, clean air outlet, and inlet of each circuit are suitable for fluid communication with the common pollutant outlet, the common clean air outlet, and the common inlet, respectively.

Any of the embodiments and/or modifications described in relation to the system of first aspect may also be applied to the system of the third aspect.

In a fourth aspect, the present invention relates to a method of removing CO₂ from air using a system as defined herein, wherein each air purification circuit is operated in one of the following modes:
a) absorption mode: wherein fluid communication from the common inlet to the absorption/desorption tank is open; fluid communication from the absorption/desorption tank to the common clean air outlet is closed; and fluid communication from the absorption/desorption tank to the common pollutant outlet is closed;
b) desorption mode: wherein fluid communication from the common inlet to the absorption/desorption tank is closed; fluid communication from the absorption/desorption tank to the common clean air outlet is closed; and fluid communication from the absorption/desorption tank to the common pollutant outlet is open;
c) clean air discharge mode: wherein fluid communication from the common inlet to the absorption/desorption tank is closed; fluid communication from the absorption/desorption tank to the common clean air outlet is open; and fluid communication from the absorption/desorption tank to the common pollutant outlet is closed;
d) isolated mode: wherein fluid communication from the common inlet to the absorption/desorption tank is closed; fluid communication from the absorption/desorption tank to the common clean air outlet is closed; and fluid communication from the absorption/desorption tank to the common pollutant outlet is closed;
e) flow through mode: wherein fluid communication from the common inlet to the absorption/desorption tank is open; fluid communication from the absorption/desorption tank to the common clean air outlet is open; and fluid communication from the absorption/desorption tank to the common pollutant outlet is closed; or
f) dwell mode: wherein fluid communication from the common inlet to the absorption/desorption tank is closed; fluid communication from the absorption/desorption tank to the common clean air outlet is closed; and fluid communication from the absorption/desorption tank to the common pollutant outlet is closed, and wherein the pressure inside the absorption/desorption tank is higher than atmospheric pressure.

Multiple circuits running different modes, with the capacity to change mode in response to operational conditions and requirements provides significant flexibility and rapid responsiveness to changing conditions on board a submarine. Operational conditions and requirements on board a submarine can change rapidly. This means that a high level of responsiveness is required in the air purification system.

The mode of the circuit depends on the configuration of the one or more valves which open or close fluid communication from the common inlet to the absorption/desorption tank, from the absorption/desorption tank to the common clean air outlet, and from the absorption/desorption tank to the common pollutant outlet. Any combination of the above modes may be used by the system in response to the specific operational needs and/or the conditions of the solid or porous absorption media. Preferably, the method includes use of the isolated mode of one or more circuit in response to suboptimal performance of said circuit. Optionally the method further includes replacing the one or more circuit that is in isolated mode, without ceasing operation of the remaining circuits.

As would be appreciated flow through mode is only possible in some circuit topologies, for example, where two separate valves are used to open/close fluid communication from the inlet to the absorption/desorption tank and from the absorption/desorption tank to the outlet, so that both of these fluid communications may be open simultaneously.

Preferably, absorption mode further comprises exposing the absorption/desorption tank to increased pressure. Increased pressure is understood to mean a pressure that is higher than the pressure outside of the system, for example, the pressure of the atmosphere in a submarine cabin. Preferably, desorption mode further comprises exposing the absorption/desorption tank to reduced pressure. Reduced pressure is understood to mean a pressure that is lower than the pressure outside of the system, for example, the pressure of the atmosphere in a submarine cabin. Preferably, absorption mode further comprises cooling the absorption/desorption tank. Cooling is understood to refer to the process of reducing the temperature of the absorption/desorption tank by removing heat energy. Cooling may cause a decrease in temperature or may maintain a stable temperature in order to prevent an increase in temperature. , for example, the temperature of the atmosphere in a submarine cabin. Preferably, desorption mode further comprises heating the absorption/desorption tank. Heating is understood to refer to increasing the temperature to a temperature that is higher than the temperature outside of the system, for example, the temperature of the atmosphere in a submarine cabin. Increased or decreased pressure may be achieved for example with a pump, such as a pressure pump, compressor pump, or vacuum pump. Heating or cooling may be achieved by any heating or cooling means, for example a heat exchanger, which may act as either a heating or cooling means. The optimum temperature to encourage absorption, and the optimum temperature to encourage desorption, will both depend on the type of solid or porous absorption media.

There are multiple sources of heat on a submarine which can be utilised to provide the heat required for the desorption mode. Such heat sources include heated water or steam from the secondary reactor loops, heated coolant water from diesel engines, or heated coolant water from the electric motors. Vacuum pumps can be large, noisy and inefficient. Utilisation of the vacuum system already present and running on a submarine makes use of this resource without adding any additional cost, volume or energy burden onto the scrubber system. This is an advantage available to CO₂ removal systems on submarines that is not available to CO₂ scrubbers in other applications.

In one example, at least one circuit is in absorption mode and at least one other circuit is in desorption mode, preferably the method further comprises switching the circuit in absorption mode to desorption mode and simultaneously switching the circuit in desorption mode to absorption mode. This is particularly useful in a system having two air purification circuits, such that absorption mode may be maintained continuously in at least one circuit. Alternatively, in a system having two air purification circuits, both circuits will operate in absorption mode simultaneously, and each circuit will independently switch to desorption mode as is necessary to maintain the activity of the solid or porous absorption media, and then switch back to absorption mode, such that at no stage are both circuits in desorption mode simultaneously.

In one example, one or more of the air purification circuits is operated in absorption/desorption tank fallback mode: wherein fluid communication from the common inlet to the absorption/desorption tank is closed; fluid communication from the absorption/desorption tank to the common clean air outlet is closed; fluid communication from the absorption/desorption tank to the common pollutant outlet is closed; and fluid communication from the absorption/desorption tank to the fallback branch or fallback line is open. As would be appreciated, this is only possible where at least one air purification circuit comprises a fallback such that fluidic communication is possible from the absorption/desorption tank to the to the common inlet, as described above. Preferably, fallback mode is used in response to the absorption media reaching a breakthrough point, where it is not fully exhausted but is not suitably active at removing pollutants, such as CO₂ to be able to vent clean air. This means that the partial capacity of the break through absorption media can still be utilised, whilst the partially cleaned air is recirculated for further purification. This allows the full absorption capacity of the absorption media to be used before replacement or desorption is required.

Preferably, absorption mode and dwell mode further comprise pumping air from one part of the absorption/desorption tank to another part of the same absorption/desorption tank using a secondary circulation loop; preferably wherein the secondary circulation pump is transitioned between forward and reverse flow. As would be appreciated, this is only possible where at least one air purification circuit comprises a secondary circulation loop, as described above. Preferably, absorption mode and dwell mode further comprise pumping air from one part of the absorption/desorption tank to another part of the same absorption/desorption tank using two or more secondary circulation loops; preferably wherein the two or secondary circulation pumps are transitioned between forward and reverse flow. As would be appreciated, this is only possible where at least one air purification circuit comprises two or more secondary circulation loop, as described above.

Preferably, the method comprises taking readings from one or more sensors within the system, for example a temperature sensor, an air quality sensor, and/or a pressure sensor, inputting the readings to a control unit, and the control unit changing the mode of operation of one or more of the circuits in response to the input from the sensors. Preferably, the method comprises measuring elapse time using a timer and changing the mode of operation of one or more of the circuits in response to elapsed time.

In a fifth aspect, the present invention relates to a method of retrofitting a system as defined in herein, or a circuit as defined herein, into a submarine atmospheric control system.

For example, retrofitting a system as defined in herein into a submarine atmospheric control system may comprise connecting the system to pre-existing pumps, vacuum pumps, heating means, cooling means, and/or heat exchangers within the atmospheric control system.

For example, retrofitting a circuit as defined herein may comprise retrofitting the circuit into a system as defined herein, or any other system comprising one or more air purification circuits.

In a sixth aspect, the present invention relates to a submarine comprising one or more system as defined herein, or one or more circuit as defined herein.

The invention will now be described with reference to the figures. The figures represent non-limiting examples of the present invention.

In all embodiments, the solid or porous absorption media may be a Metal-Organic Framework (MOF), a solid amine, a polymer-based absorber, a covalent organic framework or other suitable pollution absorbing material. In all embodiments, where pump and valve pairs are shown in a specific order (e.g., pump before valve, pump after valve), this order is illustrative only and alternative embodiments allow for the order to be reversed. In all embodiments, where pump and valve pairs are shown, a pump and valve pair may be replaced by combined pump and valve device. In all embodiments, where a valve with more than a single input and output is shown, such a valve may be replaced with a combination of valves which can achieve the same switching effect. In all embodiments, absorption media (16) may include optional absorption media loading sensor (17) which senses the loading of the absorption media. During absorption, optional absorption media loading sensor (17) can monitor the pollutant loading of the absorption media; when this sensor detects that there is insufficient absorption capacity for an additional absorption cycle, the circuit switches to desorption mode. During desorption, optional absorption media loading sensor (17) may monitor the pollutant loading of absorption media (16) and determine when to switch back to absorption mode. In all embodiments, during absorption, optional air quality sensor (15) may monitor the level of pollutants in the pressurised air; once this level reaches an acceptable level, the circuit switches to clean air discharge mode. In all embodiments, during absorption, optional heat exchanger (13) may cool the absorption media (16) or foul air in order to increase its loading efficiency. During desorption, optional heat exchanger (13) may heat the absorption media (16) in order to enhance desorption. In all embodiments, a mechanism to encourage airflow across or through the absorption media (16) may be included, for example a fan or baffles within absorption/desorption tank (1). For all embodiments, optional pressure sensor (22) either directly or via control unit (99) may be used to manage the absorption/desorption tank (1) pressure. During absorption, pressure sensor (22) may prevent over-pressurisation; when a threshold pressure is reached, foul air inlet valve (4) or common valve (19) is closed and foul air input pump (14) or common pump (20) is shut off; the foul air will then dwell, at pressure in absorption/desorption tank (1) while pollutants are removed. In clean air discharge mode, pressure sensor (22) may monitor pressure to ensure that absorption/desorption tank (1) pressure does not fall to the level at which pollutants will escape from the absorption media (16). Once this pressure is neared, the system may transition to absorption mode or desorption mode; the decision on which mode to transition to may be made based on absorption media loading, number of cycles processed by the absorption media, elapsed absorption time or other means. In all embodiments, there may be an optional dwell stage during absorption mode. In this dwell stage, absorption/desorption tank (1) is filled with pressurised foul air, all valves into and out from absorption/desorption tank (1) are sealed and the absorption media (16) absorbs the pollutant from this air. Optionally, a mechanism to encourage airflow across or through the absorption media (16) is used to optimise contact between the foul air and the absorption media. Determination of when to switch to clean air discharge mode may be done by measured elapsed time or through the use of optional air quality sensor (15). In all embodiments, switching between modes may be triggered by sensors, such as the aforementioned sensors, by time-based mechanisms or similar. Valve and pump actuation for mode switching may be achieved by computational, electrical or mechanical means, without additional control mechanisms or may be coordinated using optional control unit (99).

In all embodiments, the valves may optionally be slow opening, slow release or damped valves which release any pressure differential gradually. The use of such valves will assist with reducing system noise during mode transitions. In all embodiments, optionally the pressure differentials between modes during mode transitions may be used to increase overall system efficiency. For example, during transition from absorption mode to clean air discharge mode, the high pressure in absorption/desorption tank (1) may be used to assist venting of clean air to the clean air outlet (6). For example, during transition from desorption mode to absorption mode, the low pressure in absorption/desorption tank (1) may be used to assist foul air entry into absorption/desorption tank (1) via foul air inlet (3).

The number of circuits in the exemplary systems shown in various figures and their corresponding statuses should be regarded as illustrative and not limiting; for example, topologies including any number of circuits are possible and the operating mode of each circuit is independent of any of the others.

Optionally a mechanism to encourage or disrupt airflow across or through the absorption media (16) may be included, for example a fan or baffles within absorption/desorption tank (1).

In an absorption/desorption tank a solid absorber may be transitioned between absorption mode and desorption mode. In absorption mode, the active chemistry binds or associates preferentially with CO₂ and other pollutant molecules in the air compared to Nitrogen, Oxygen or other air constituents. This traps and holds on to CO₂ or other pollutant until the absorber is saturated and cannot bind any further CO₂ or other pollutant By operating at high pressure, large amounts of CO₂ or other pollutant can be bound. In desorption mode, the pressure is released, causing the bound CO₂ to desorb from the active chemistry and flow out of the system as a CO₂-enriched gas. If the pressure is reduced to normal background atmospheric pressure, some CO₂ will remain absorbed onto the active chemistry. This amount of CO₂ will effectively sit on the chemistry throughout absorb/desorb cycles as a spectator species. This represents a significant loss of real active chemistry that is not working towards CO₂ removal. Applying a vacuum during the desorb cycle creates a further driving force for CO₂ molecules to leave the active chemistry, meaning that a greater proportion of CO₂ is released and effective absorber capacity is increased for the next cycle. If effective absorber capacity is increased, then a system can be reduced in size for the same workload of CO₂ scrubbing, saving cost, energy and system volume. In addition, application of a vacuum and optionally heat during the desorb cycle will also help to remove unwanted species that are bound to the active chemistry. For example, water molecules in the incoming air stream may bind to absorption sites, limiting capacity for CO₂ absorption. These unwanted molecules can then persist throughout the absorption/desorption cycles reducing capacity for multiple system cycles. This may be a progressive effect, where active capacity continues to reduce throughout successive cycles. Application of a vacuum and optionally heat allows for the removal of these unwanted molecules, refreshing absorber capacity.

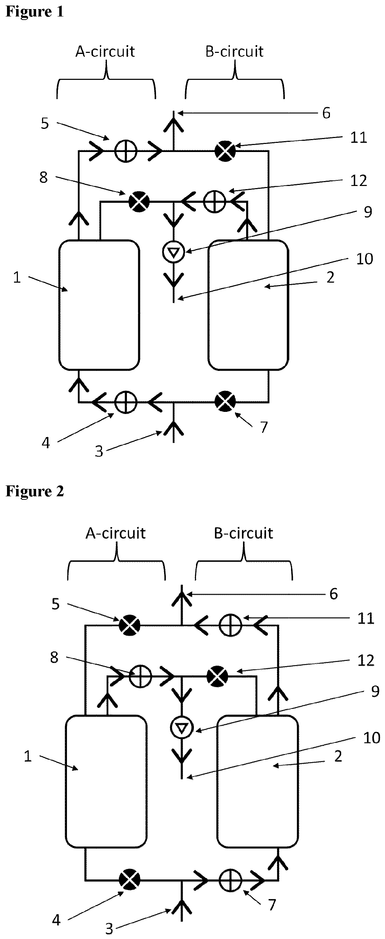

Figure 1 shows a system comprising two air purification circuits, labelled the A-circuit and the B-circuit. The A-circuit is in absorption mode and the B-circuit is in desorption mode. Absorption mode for the A-circuit: Air containing CO₂ and / or other pollutants enters via inlet (3); valve (4) is open to the airflow and valve (7) is closed to the airflow, causing the air to flow into absorption/desorption tank (1); CO₂ is removed from the air in absorption/desorption tank (1); valve (5) is opened to allow the clean air to flow out of clean air outlet (6); the removed CO₂ is retained in absorption/desorption tank (1); valve (8) is closed to prevent clean air flowing into waste outlet (10). Desorption mode for the B-circuit: valve (7) is closed preventing air from entering absorption/desorption tank (2); valve (12) is opened to allow gas flow between absorption/desorption tank (2) and outlet (10); a vacuum is applied to absorption/desorption tank (2) by vacuum pump (9) to enhance desorption; extracted CO₂ exits absorption/desorption tank (2), passes through valve (8) and exits the system via outlet (10); valve 11 is closed to prevent CO₂ from exiting into the clean air outlet (6).

Figure 2 shows the system from figure 1 with the modes reversed, with the B-circuit in absorption mode and the A-circuit in desorption mode. Absorption mode for the B-circuit: Air containing CO₂ and / or other pollutants enters via inlet (3); valve (7) is open to the airflow and valve (4) is closed to the airflow, causing the air to flow into absorption/desorption tank (2); CO₂ is removed from the air in absorption/desorption tank (2); valve (11) is opened to allow the clean air to flow out of clean air outlet (6); the removed CO₂ is retained in absorption/desorption tank (2) ; valve (12) is closed to prevent clean air flowing into waste outlet (10). Desorption mode for the A-circuit: valve (4) is closed preventing air from entering absorption/desorption tank (1); valve (8) is opened to allow gas flow between absorption/desorption tank (1) and outlet (10); a vacuum is applied to absorption/desorption tank (1) by vacuum pump (9) to enhance desorption; extracted CO₂ exits absorption/desorption tank (1), passes through valve (8) and exits the system via outlet (10); valve (5) is closed to prevent CO₂ from exiting into the clean air outlet (6).

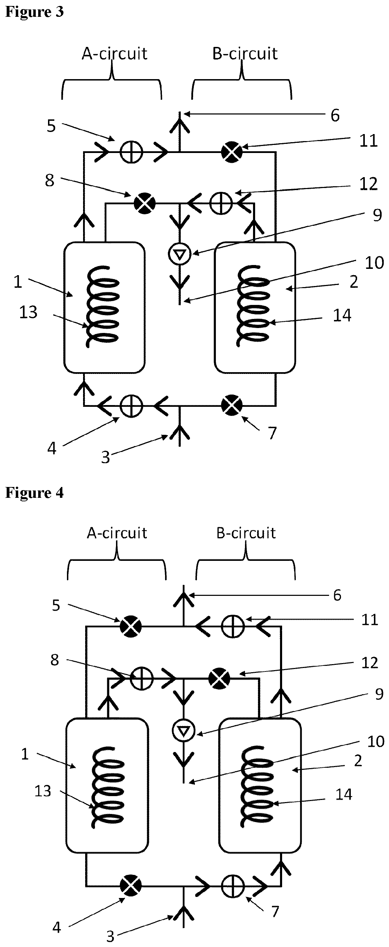

Figure 3 shows a system comprising two air purification circuits, labelled the A-circuit and the B-circuit. The A-circuit is in absorption mode and the B-circuit is in desorption mode. Absorption mode for the A-circuit: Air containing CO₂ and / or other pollutants enters via inlet (3); valve (4) is open to the airflow and valve (7) is closed to the airflow, causing the air to flow into absorption/desorption tank (1); CO₂ is removed from the air in absorption/desorption tank (1); valve (5) is opened to allow the clean air to flow out of clean air outlet (6); the removed CO₂ is retained in absorption/desorption tank (1); valve (8) is closed to prevent clean air flowing into waste outlet (10); heat exchanger (13) is either inactive or is used to cool the active chemistry. Desorption mode for the B-circuit: valve (7) is closed preventing air from entering absorption/desorption tank (2); valve (12) is opened to allow gas flow between absorption/desorption tank (2) and outlet (10); heat exchanger (14) is heated to heat the active chemistry and enhance desorption; a vacuum is applied to absorption/desorption tank (2) by vacuum pump (9) to enhance desorption; extracted CO₂ exits absorption/desorption tank (2), passes through valve (8) and exits the system via outlet (10); valve 11 is closed to prevent CO₂ from exiting into the clean air outlet (6).

Figure 4 shows the system from figure 3 with the modes reversed, with the B-circuit in absorption mode and the A-circuit in desorption mode. Absorption mode for the B-circuit: Air containing CO₂ and / or other pollutants enters via inlet (3); valve (7) is open to the airflow and valve (4) is closed to the airflow, causing the air to flow into absorption/desorption tank (2); CO₂ is removed from the air in absorption/desorption tank (2); valve (11) is opened to allow the clean air to flow out of clean air outlet (6); the removed CO₂ is retained in absorption/desorption tank (2); valve (12) is closed to prevent clean air flowing into waste outlet (10); heat exchanger (13) is either inactive or is used to cool the active chemistry. Desorption mode for the A-circuit: valve (4) is closed preventing air from entering absorption/desorption tank (1); valve (8) is opened to allow gas flow between absorption/desorption tank (1) and outlet (10); heat exchanger (13) is heated to heat the active chemistry and enhance desorption; a vacuum is applied to absorption/desorption tank (1) by vacuum pump (9) to enhance desorption; extracted CO₂ exits absorption/desorption tank (1), passes through valve (8) and exits the system via outlet (10); valve (5) is closed to prevent CO₂ from exiting into the clean air outlet (6).

Each circuit can operate in one of three or more modes, including: absorption mode, where foul air has pollutants removed from it; clean air discharge mode, where the purified air is released; and desorb mode where pollutants are removed from the air purification circuit. A fourth mode, flow-through, is possible for some embodiments of these circuits. A sub-mode, dwell, may be used during absorption mode to make optimal use of the absorption media. All system embodiments may include optional sensors in the absorption/desorption tank including sensors for air quality and air pressure, and an optional sensor which detects pollutant loading on the selected absorption media. These sensors are used to control the system operation either directly or in combination with a control unit.

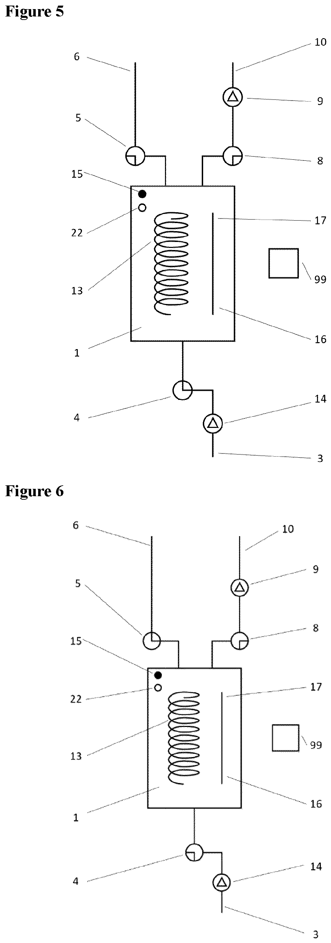

Figure 5 shows a single air purification circuit of according to the first embodiment described above, in absorption mode. Absorption/desorption tank (1) includes a solid or porous absorption media (16). Foul air containing pollutants enters via foul air inlet (3), assisted by foul air input pump (14); foul air inlet valve (4) is open to the airflow and exit valves (5, 8) are closed to the airflow, causing the foul air to become pressurised in absorption/desorption tank (1) where pollutants are removed by absorption media (16). Optional heat exchanger (13) may be used to cool the absorption media (16) or foul air in order to increase absorption efficiency. In this illustration, foul air input pump (14) is placed before foul air inlet valve (4); this positioning may be reversed. Also in this illustration, pollutant pump (9) is placed after valve (8); this positioning may also be reversed. Optionally, a pump may be added to clean air outlet (6), either before or after valve (5).

Figure 6 shows the single air purification circuit from Figure 5 in clean air discharge mode. Foul air inlet valve (4) is closed and foul air input pump (14) is deactivated, preventing the exit of clean air through foul air inlet (3). Valve (8) is closed. Valve (5) is opened to allow the pressurised clean air to exit via clean air outlet (6). In one embodiment, the pressure in absorption/desorption tank (1) is sufficient for the clean air to exit via clean air outlet (6); in an alternative embodiment, an additional vacuum pump is installed between valve (5) and clean air outlet (6) to drive clean air from absorption/desorption tank (1) to clean air outlet (6).

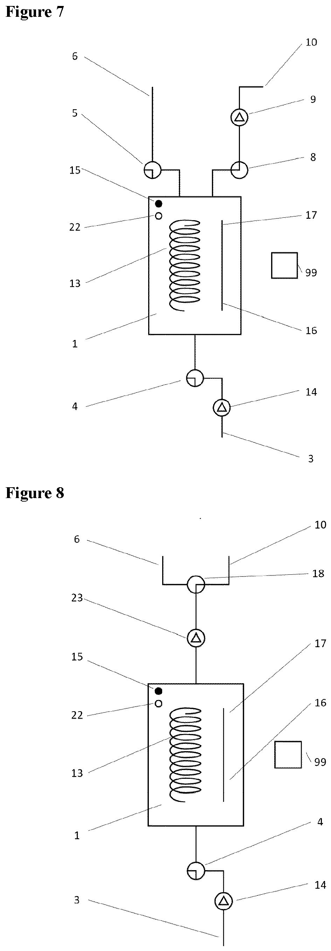

Figure 7 shows the single air purification circuit from Figures 5 and 6 in desorb mode. Foul air input pump (14) is deactivated and foul air inlet valve (4) is closed to prevent desorbed pollutants entering the foul air input stream. Valve (5) is closed and the optional clean air pump is stopped to prevent desorbed pollutants entering the clean air discharge stream. Valve (8) is opened and pollutant pump (9) is activated creating a vacuum in absorption/desorption tank (1) which enhances desorption; extracted pollutants exit absorption/desorption tank (1), pass through valve (8) and exit the system via pollutant outlet (10). Optional heat exchanger (13) may heat the absorption media (16) in order to enhance desorption.

Figure 8 shows a single air purification circuit according to the second embodiment described above, which uses a common outlet for clean air and discharged pollutants, thereby reducing part count, installation complexity, space requirements and capital cost. Valve (18) has three positions: closed, open to clean air outlet (6) and open to pollutant outlet (10). In absorption mode, foul air inlet valve (4) is open and foul air enters via foul air inlet (3) and is pressurised in absorption/desorption tank (1) by foul air input pump (14). Vacuum pump (23) is deactivated and valve (18) is closed, ensuring pressure build up within absorption/desorption tank (1). In clean air discharge mode, foul air inlet valve (4) is closed and foul air input pump (14) is deactivated, preventing the exit of clean air through foul air inlet (3); valve (18) is opened to allow the pressurised clean air to exit via clean air outlet (6); vacuum pump (23) is activated to drive clean air from absorption/desorption tank (1) to clean air outlet (6). In desorb mode (shown), foul air inlet valve (4) is closed and foul air input pump (14) is deactivated, preventing the exit of pollutants through foul air inlet (3); valve (18) is opened to allow pollutants to exit via pollutant outlet (10); vacuum pump (23) is activated creating a vacuum in absorption/desorption tank (1) which enhances desorption; extracted pollutants exit absorption/desorption tank (1), pass through valve (18) and exit the system via pollutant outlet (10).

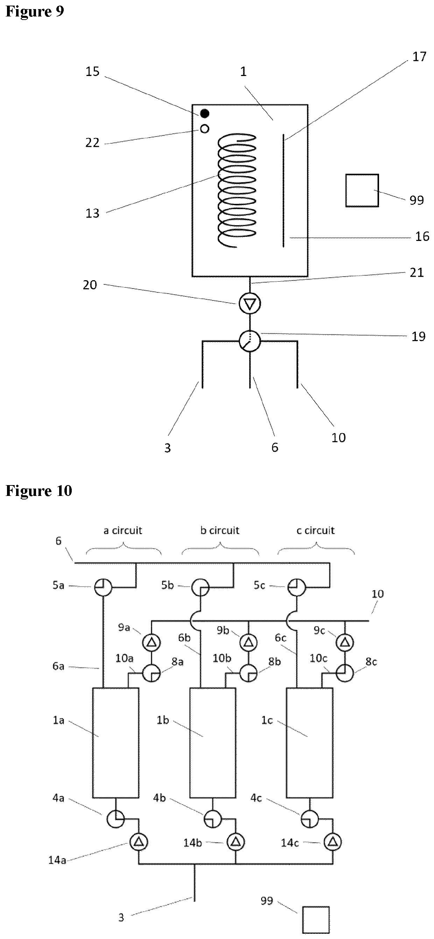

Figure 9 shows a single air purification circuit according to the third embodiment described above, which uses a common inlet/outlet for all modes, further reducing part count, installation complexity, space requirements and capital costs. In this embodiment, common inlet / outlet (21) provides a single channel into / out from absorption/desorption tank (1). Common pump (20) is used to pressurise and vent absorption/desorption tank (1). Common valve (19) is used to switch gas flow between foul air inlet (3), clean air outlet (6) and pollutant outlet (10). In absorption mode, common pump (20) is activated to pressurise absorption/desorption tank (1), common valve (19) is set to allow foul air to enter absorption/desorption tank (1) via foul air inlet (3); pressurised foul air has pollutants removed in absorption/desorption tank (1) in the manner previously described. In clean air discharge mode, common pump (20) is used to vent absorption/desorption tank (1), common valve (19) is set to allow clean air to exit absorption/desorption tank (1) via clean air outlet (6). In desorb mode, common pump (20) is used to vent and create a vacuum in absorption/desorption tank (1), common valve (19) is set to allow pollutants to be evacuated via pollutant outlet (10).

Figure 10 shows an example of three interconnected air purification circuits (a, b, c) of the first embodiment. The a-circuit is in absorption mode, the b-circuit is in clean air discharge mode and the c-circuit is in desorption mode. For simplicity, the internal elements of the absorption/desorption tanks (1a, 1b, 1c) are not shown. In the illustrated embodiment, one foul air input pump is used per circuit; in alternative embodiments, a single pump may be shared between all circuits or foul air inlets pumps may be shared between one or more circuits. The a-circuit, which is in absorption mode, has foul air inlet valve (4a) open to allow foul air to be pumped into absorption/desorption tank (1a) using foul air input pump (14a). Clean air discharge valve (5a) and pollutant discharge valve (8a) are both closed, ensuring that pressure can build up within absorption/desorption tank 1a. The b-circuit, which is in clean air discharge mode, has foul air inlet valve (4b) closed to prevent the ingress of foul air and pollutant discharge valve (8b) closed to prevent the egress of clean air through the incorrect channel. Clean air discharge valve (5b) is open to allow clean air to egress via clean air outlet (6b - 6). In an additional embodiment, a further pump may be placed on the master clean air outlet (6) or the circuit-specific clean air outlets (6a, 6b, 6c) to assist with clean air egress. The c-circuit, which is in desorption mode, has both foul air inlet valve (4c) closed and clean air discharge valve (5c) closed to prevent the egress of pollutants through the incorrect channel. Pollutant discharge valve (8c) is opened and pollutant pump (9c) is activated to desorb the absorption media in the way previously discussed. Desorbed pollutant egresses from absorption/desorption tank (1c) to common pollutant outlet (10) via circuit pollutant outlet (10c), valve (8c) and circuit pollutant pump (9c).

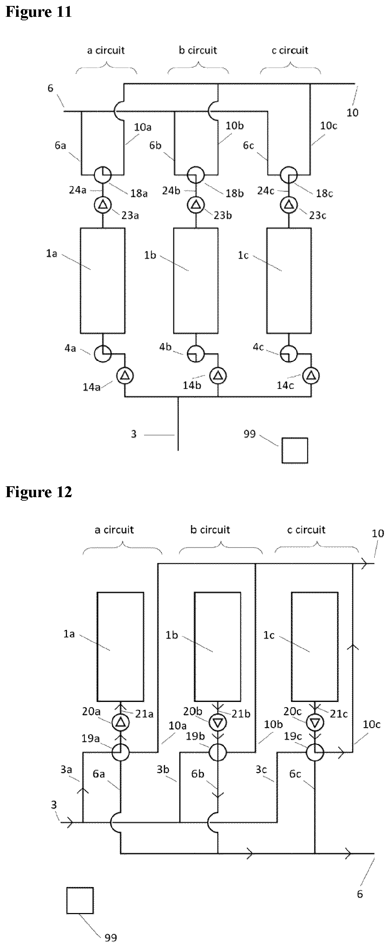

Figure 11 shows an example of three interconnected air purification circuits of the second embodiment. The a-circuit is in absorption mode, the b-circuit is in clean air discharge mode and the c-circuit is in desorption mode. For simplicity, the internals of the absorption/desorption tanks (1a, 1b, 1c) are not shown. In the illustrated embodiment, a single foul air inlet pump is used; in alternative embodiments, one foul air inlet pump per circuit may be used or foul air inlets pumps may be shared between circuits. Multipurpose valves (18a, 18b, 18c) may be in one of three positions: clean air discharge position, whereby absorption/desorption tank discharge line (24a, 24b, 24c) is connected to circuit clean air outlet (6a, 6b, 6c); desorption position, whereby absorption/desorption tank discharge line (24a, 24b, 24c) is connected to the relevant circuit pollutant outlet (10a, 10b, 10c); and sealed position, whereby the valve blocks egress from the corresponding absorption/desorption chamber, this mode may be used when the corresponding circuit is in absorption mode. The a-circuit, which is in absorption mode, has foul air inlet valve (4a) open to allow foul air to be pumped into absorption/desorption tank (1a) using foul air input pump (14a). Valve (18a) is in its sealed position and vacuum pump (23a) is deactivated, allowing pressure to build up within absorption/desorption tank (1a). The b-circuit, which is in clean air discharge mode, has foul air inlet valve (4b) closed to prevent the ingress of foul air and to prevent the egress of clean air through the incorrect channel. Valve (18b) is set in its clean air discharge position, allowing clean air to discharge via circuit clean air outlet (6b) into master clean air outlet (6), assisted by vacuum pump (23b). The c-circuit, which is in desorption mode, has foul air inlet valve (4c) closed to prevent the egress of pollutants through the incorrect channel. Valve (18c) is set in its desorption position, allowing desorbed pollutant to discharge via circuit pollutant outlet (10c) into master pollution outlet (10), assisted by vacuum pump (23c).

Figure 12 shows an example of three interconnected air purification circuits of the third embodiment. The a-circuit is in absorption mode, the b-circuit is in clean air discharge mode and the c-circuit is in desorption mode. For simplicity, the internals of the absorption/desorption tanks (1a, 1b, 1c) are not shown. Common valves (19a, 19b, 19c) may be in one of four positions: foul air input position, whereby foul air circuit inlet (3a, 3b, 3c) is connected to corresponding common pump (20a, 20b, 20c); clean air discharge position, whereby circuit clean air outlet (6a, 6b, 6c) is connected to corresponding common pump (20a, 20b, 20c); desorption position, whereby circuit pollutant outlet (10a, 10b, 10c) is connected to corresponding common pump (20a, 20b, 20c); and sealed, whereby the valve blocks intake and exhaust to the corresponding absorption/desorption chamber, thereby isolating that circuit. The a-circuit, which is in absorption mode, has common valve (19a) set to foul air input position, allowing common pump (20a) to pump in foul air to absorption/desorption tank (1a) via circuit foul air inlet (3a) and master foul air inlet (3). The b-circuit, which is in clean air discharge mode, has common valve (19b) set to clean air discharge position, allowing common pump (20b) to pump clean air from absorption/desorption tank (1b) to master clean air outlet (6) via circuit clean air outlet (6b). The c-circuit, which is in desorption mode, has common valve (19c) set to desorption position, allowing common pump (20c) to pump pollutant from absorption/desorption tank (1c) to master pollutant outlet (10) via circuit pollutant outlet (10c).

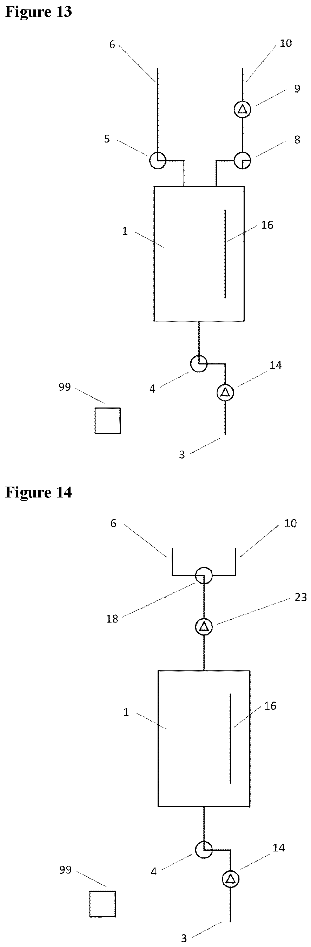

Figure 13 sets out an alternative embodiment of Figures 5 - 6 in a combined absorption/clean air discharge mode using flow-through. In this embodiment, foul air inlet valve (4) is opened to allow the ingress of foul air into absorption/desorption tank (1), assisted by foul air input pump (14). The foul air passes through absorption media (16) and pollutant is removed from it. Valve (5) is opened to allow the cleaned air to escape via clean air outlet (6). In a further alternative embodiment of Figure 13 and Figures 5 - 6, a vent pump is installed either between absorption/desorption tank (1) and valve (5) or valve (5) and clean air outlet (6). This pump can assist with venting clean air from absorption/desorption tank (1); such venting may be at the same rate as foul air input, to ensure consistent flow or the vent pump may be run at a different rate to the foul air input pump (14), to provide a variable pressure inside absorption/desorption tank (1). As an alternative, a pressure restrictor may be placed on the clean air outlet (6) to provide appropriate pressurisation in absorption/desorption tank (1); this pressure restrictor may be placed before or after valve (5). In this embodiment, desorption is achieved in the same manner as set out for Figure 7.

Figure 14 sets out an alternative embodiment of Figure 8 in a combined absorption/clean air discharge mode using flow-through. In this embodiment, foul air inlet valve (4) is opened to allow the ingress of foul air into absorption/desorption tank (1), assisted by foul air input pump (14). The foul air passes through absorption media (16) and pollutant is removed from it. Valve (18) is set to allow clean air to flow from absorption/desorption tank (1) to clean air outlet (6). Optionally vacuum pump (23) can assist with venting clean air from absorption/desorption tank (1); such venting may be at the same rate as foul air input, to ensure consistent flow or the vent pump may be run at a different rate to the foul air input pump (14), to provide a variable pressure inside absorption/desorption tank (1).

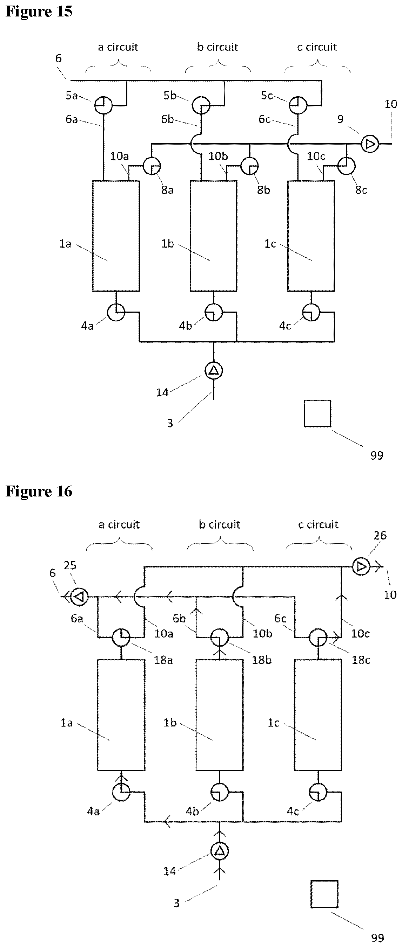

Figure 15 sets out an alternative embodiment of Figure 11, where circuit-specific foul air input pumps 14a, 14b, 14c are replaced by common foul air input pump (14) and circuit-specific pollutant pumps (9a, 9b, 9c) are replaced with common pollutant pump (9). An optional clean air outlet pump (not shown) may be placed on the clean air outlet (6). For installations with multiple circuits, this embodiment will reduce the number of pumps required. Alternatives to this embodiment (not illustrated) allow for common pumps on one or more of these circuits.

Figure 16 sets out an alternative embodiment of Figure 11, where circuit-specific pumps 14a, 14b, 14c, 23a, 23b, 23c are replaced with shared pumps. Clean air outlet pump (25) is placed on the clean air outlet (6) and is provides pumping for all circuits which are in clean air discharge mode. Pollutant pump (26) is placed on the pollutant outlet (10) and provides pumping for all circuits which are in desorption mode. For installations which use more than three circuits, this embodiment will reduce the number of pumps required.

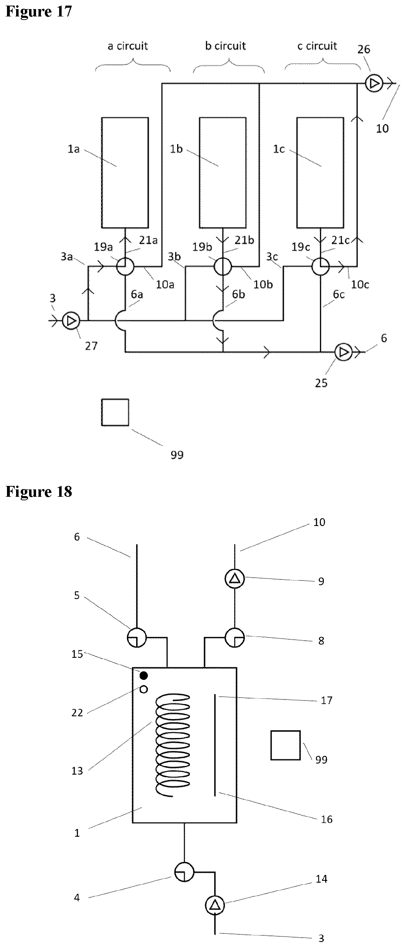

Figure 17 sets out an alternative embodiment of Figure 12, where circuit-specific pumps 20a, 20b, 20c are replaced with shared pumps. Foul air input pump (27) is placed on the foul air inlet (3) and provides input pumping for all circuits which are in absorption mode. Clean air outlet pump (25) is placed on the clean air outlet (6) and is provides pumping for all circuits which are in clean air discharge mode. Pollutant pump (26) is placed on the pollutant outlet (10) and provides pumping for all circuits which are in desorption mode. For installations which use more than three circuits, this embodiment will reduce the number of pumps required.

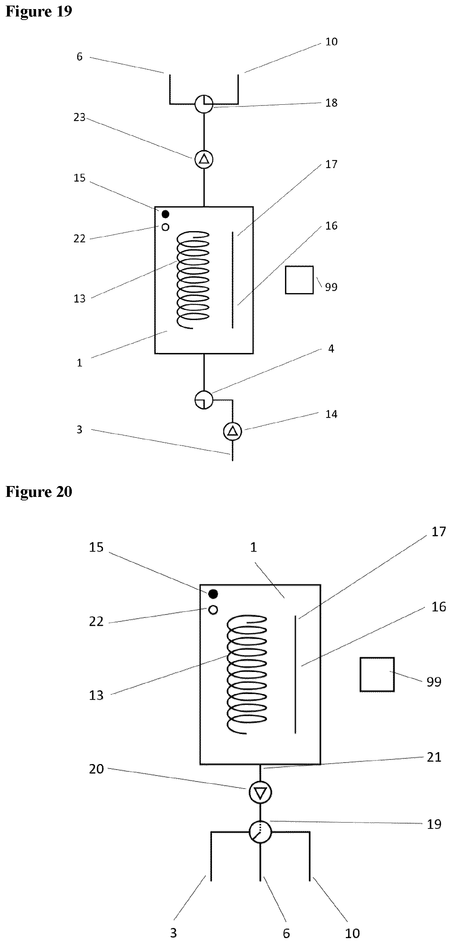

Figures 18 - 20 show the first, second and third embodiments in dwell mode. Dwell mode is used when absorption/desorption tank (1) pressure is approaching or at its maximum and the pollutant level has not dropped to an acceptable level to allow the cleaned air to be vented. The circuit will remain in dwell mode until such time as the pollutant level falls to an acceptable level or a time threshold is exceeded. In dwell mode, all pumps specific to the dwelling circuit are deactivated and all valves into and out of absorption/desorption tank are set to their closed positions, thereby sealing the foul air in absorption/desorption tank (1) for cleaning. In topologies where pumps are shared between circuits, the shared pumps may remain active and the dwelling circuit be isolated by its valves alone.

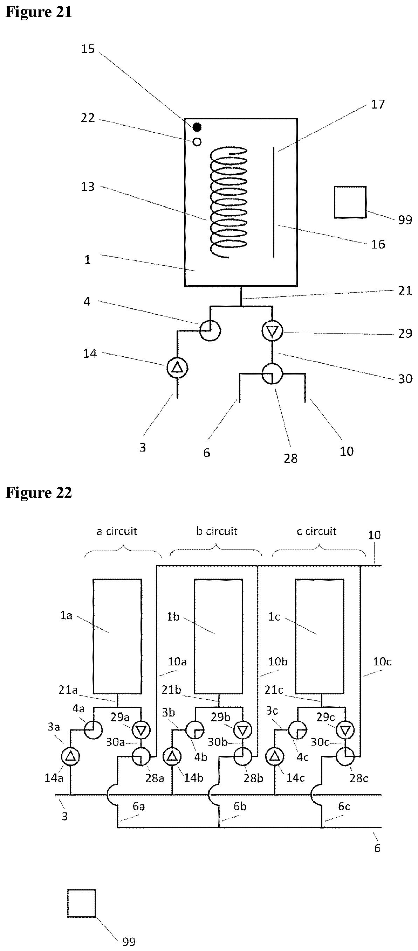

Figure 21 shows a fourth embodiment of a single air purification circuit using a common absorption/desorption tank inlet/outlet (21) and separate pumps for generating absorption/desorption tank pressure and vacuum, shown in absorption mode. Common absorption/desorption tank inlet/outlet (21) connects absorption/desorption tank (1), foul air inlet valve (4) and vacuum pump (29). In absorption mode (shown), foul air inlet (3) is connected to foul air input pump (14) which can pump foul air into absorption/desorption tank (1) through foul air inlet valve (4) and common absorption/desorption tank inlet/outlet (21). Foul air inlet valve (4) may be a switchable valve or a simple one-way valve which allows foul air to flow into absorption/desorption tank (1) but not out of it. Valve (28) is closed to prevent the outflow of foul air into the clean air outlet (6) or pollutant outlet (10). In clean air discharge mode, foul air inlet valve (4) is closed, either by switching or by pressure against its mechanism, valve (28) is opened to allow cleaned air to flow from absorption/desorption tank (1) to clean air outlet (6), aided by vacuum pump (29), via common absorption/desorption tank inlet/outlet (21) and common outlet line (30). In desorption mode, foul air inlet valve (4) is closed, either by switching or by pressure against its mechanism, valve (28) is opened to allow pollutant to flow from absorption/desorption tank (1) to pollutant outlet (10) via common absorption/desorption tank inlet/outlet (21) and common outlet line (30). Vacuum pump (29) provides sufficient vacuum to encourage effective desorption; optionally desorption may be assisted by heat.

Figure 22 shows an example of three interconnected air purification circuits of the fourth embodiment. The a-circuit is in absorption mode, the b-circuit is in clean air discharge mode and the c-circuit is in desorption mode. For simplicity, the internals of the absorption/desorption tanks (1a, 1b, 1c) are not shown. Foul air inlet valves (4a, 4b, 4c) may be switchable valves which switch between open and closed or they may be simple one-way pressure-resist valves which allow foul air to flow into absorption/desorption tank (1) but not out of it. Valves (28a, 28b, 28c) may be in one of three positions: closed, whereby cleaned air or pollutants cannot flow from common absorption/desorption tank inlet/outlet (21a, 21b, 21c) to either circuit clean air outlets (6a, 6b, 6c) or circuit pollutant outlets (10a, 10b, 10c); clean air discharge, whereby a fluid circuit is established between from common absorption/desorption tank inlet/outlet (21a, 21b, 21c) and the appropriate clean air outlet (6a, 6b, 6c); pollutant discharge whereby a fluid circuit is established between from common absorption/desorption tank inlet/outlet (21a, 21b, 21c) and the corresponding pollutant outlet (10a, 10b, 10c). The a-circuit, is in absorption mode. Foul air input pump (14a) pumps foul air from foul air inlet (3); foul air inlet valve (4a) establishes a fluid circuit between foul air input pump (14a) and absorption/desorption tank (1a) via circuit foul air inlet (3a), allowing foul air to be pumped into absorption/desorption tank (1a), where it is cleaned in the aforementioned manner. Valve (28a) is closed preventing discharge and allowing pressure build up in absorption/desorption tank (1a). The b-circuit is in clean air discharge mode. Foul air input pump (14b) is deactivated and foul air inlet valve (4b) seals circuit foul air inlet (3b). Valve (28b) establishes a fluid connection between absorption/desorption tank (1b) and circuit clean air outlet (6b), closing off pollutant outlet (10b) in the process. Pump (29b) pumps clean air from absorption/desorption tank (1b) to circuit clean air outlet (6b). The c-circuit is in desorption mode. Foul air input pump (14c) is deactivated and foul air inlet valve (4c) seals circuit foul air inlet (3c). Valve (28c) establishes a fluid connection between absorption/desorption tank (1b) and pollutant outlet (10c), closing off circuit clean air outlet (6c) in the process. Pump (29c) creates low pressure in absorption/desorption tank (1c), causing desorption and vents pollutant to pollutant outlet (10c).

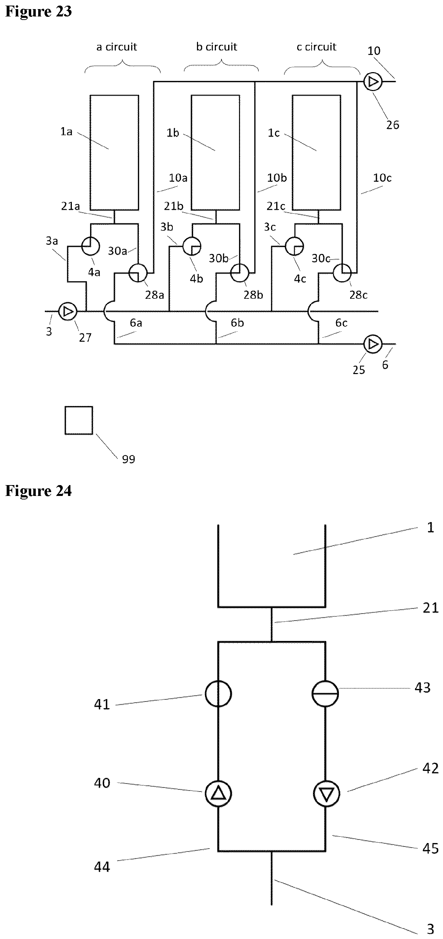

Figure 23 presents an alternative embodiment of Figure 22 where circuit-specific foul air input pumps (14a, 14b, 14c) and pumps (29a, 29b, 29c) are replaced with shared foul air input pump (27), shared clean air output pump (25) and shared pollutant pump (26). The a-circuit is in absorption mode, the b-circuit is in clean air discharge mode and the c-circuit is in desorption mode. For simplicity, the internals of the absorption/desorption tanks (1a, 1b, 1c) are not shown. The a-circuit is in absorption mode. Foul air input pump (27) pumps foul air from foul air inlet (3); foul air inlet valve (4a) establishes a fluid circuit between foul air input pump (27) and absorption/desorption tank (1a) via circuit foul air inlet (3a), allowing foul air to be pumped into absorption/desorption tank (1a), where it is cleaned in the aforementioned manner. Valve (28a) is closed preventing discharge and allowing pressure build up in absorption/desorption tank (1a). The b-circuit is in clean air discharge mode. Foul air inlet valve (4b) seals circuit foul air inlet (3b). Valve (28b) establishes a fluid connection between absorption/desorption tank (1b) and circuit clean air outlet (6b), closing off pollutant outlet (10b) in the process. Clean air outlet pump (25) pumps clean air from absorption/desorption tank (1b) to common clean air outlet (6) via circuit clean air outlet (6b). The c-circuit is in desorption mode. Foul air inlet valve (4c) seals circuit foul air inlet line (3c). Valve (28c) establishes a fluid connection between absorption/desorption tank (1b) and pollutant outlet (10c), closing off circuit clean air outlet (6c) in the process. Pollutant pump (26) creates low pressure in absorption/desorption tank (1c), causing desorption and vents pollutant to pollutant outlet (10) via circuit-specific pollutant outlet (10c).

Figure 22 and Figure 23 show embodiments where all pumps are circuit-specific (Figure 22) or all pumps are shared between circuits (Figure 23). Other embodiments are also possible where some pumps are circuit-specific and some are shared between circuits.

The invention comprises a method, or system improvements and supporting methods for dealing with saturated or failing absorber in the system described in patent application GB2413400.9 the entirety of which is incorporated by reference.

UK patent application GB2413400.9 the entirety of which is incorporated by reference discusses the normal operation of multiple embodiments of the system. The present patent application relates to the anomalous situation when an absorber is unable to remove sufficient pollutant from the foul air in its corresponding absorption/desorption tank.

When removing pollutant from foul air, the absorption/desorption tank is pressurised with foul air and the absorber removes pollutants from this foul air. Under normal operating conditions, the absorber will be able to remove sufficient pollutant from the foul air to allow the cleaned air to be used in the intended manner. Under atypical circumstances, such as the absorber's capacity being reduced due to age or excessive duty cycles, or foul air carrying an excessive amount of pollutant, it is possible that the absorber may not be able to remove sufficient pollutant from the foul air to allow it to be used in the intended manner. Should the absorber capacity be insufficient to clean the foul air to an acceptable level, then ideally the partially cleaned foul air should be routed back to the foul air input to allow cleaning by an alternative air purification circuit.

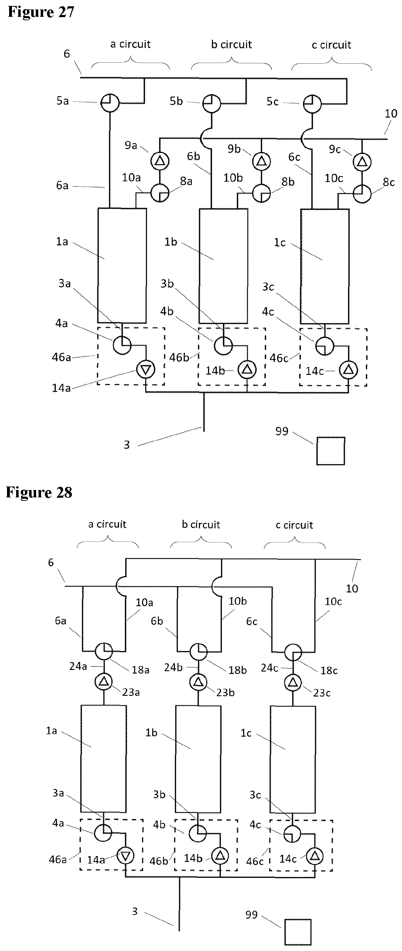

Some system topologies, such as those set out in Figures 27, 28 and 29 have circuit-specific pumps which allow partially cleaned foul air to be routed back to the foul air input using their existing pump and valve hardware, with alternative settings. The availability of such pumps may be limited and it may be appropriate to replace the foul air input pump and switching valve with an alternative arrangement, for example those set out in Figures 24, 25 or 26.

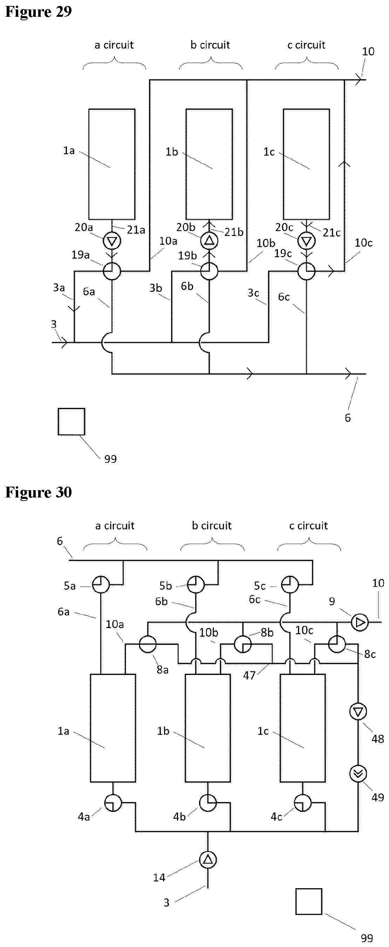

System topologies which share pumps across lines, such as those set out in Figures 30, 31, 32 and 34 require additional valve positions, discharge lines and one or more pumps to allow partially cleaned foul air to be routed back to the foul air input. In all topologies, it is critical that absorption/desorption tank pressure is carefully managed as the intention is to vent partially cleaned air back to the foul air input and not to cause desorption of the absorber. Absorber desorption will be carried out once a sufficient proportion of the partially cleaned foul air has been discharged.

Absorption/desorption tank fallback mode can be triggered through the use of timers and sensors: if, after a threshold time, the air quality in the absorption/desorption tank in absorption mode has not fallen to an acceptable level, absorption/desorption tank fallback mode should be triggered; if the absorption/desorption tank is in absorption mode and an absorber status sensor detects that the absorber has insufficient capacity, absorption/desorption tank fallback mode should be triggered. In all embodiments, when partially cleaned foul air has been sufficiently vented from the absorption/desorption tank, that specific circuit will transition to desorb mode.

Figure 24 shows a valve and pump arrangement which allows dual direction flow. Foul air inlet (3) divides into inlet branch (44) and fallback branch (45). Under normal operation fallback valve (43) is closed and vacuum pump (42) is deactivated. When the circuit is in absorption mode (shown), foul air inlet pump (40) is activated, foul air inlet valve (41) is opened to allow foul air to be pumped into absorption/desorption tank (1) via common absorption/desorption tank inlet/outlet (21). Should fallback mode be triggered, foul air inlet valve (41) is closed, foul air inlet pump (40) is deactivated, fallback valve (43) is opened and vacuum pump (42) is activated, pumping partially cleaned foul air back to foul air inlet (3) via fallback branch (45).

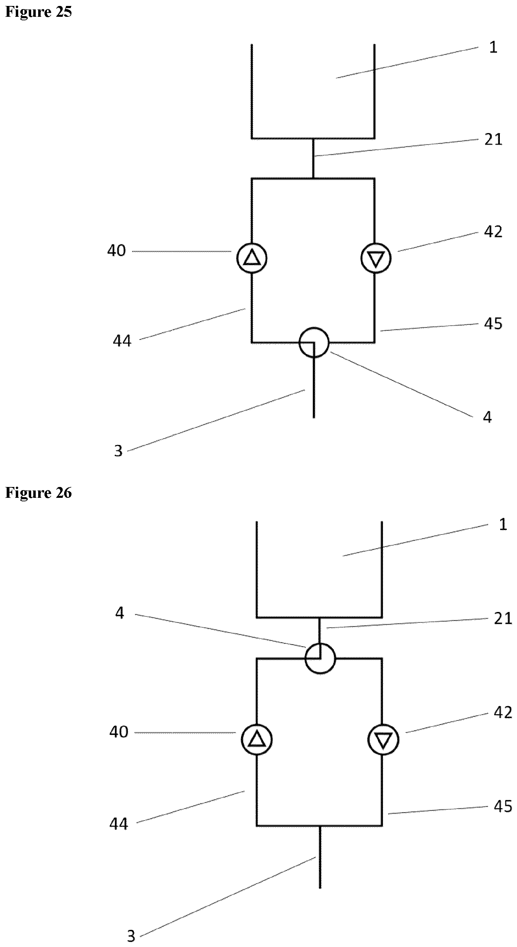

Figures 25 and 26 show alternative valving arrangements for Figure 24, replacing foul air inlet valve (41) and fallback valve (43) with common foul air inlet valve (4). When the circuit is in absorption mode (shown), foul air inlet pump (40) is activated, common foul air inlet valve (4) is opened to allow foul air to be pumped into absorption/desorption tank (1) via common absorption/desorption tank inlet/outlet (21). Should fallback mode be triggered, foul air inlet pump (40) is deactivated, vacuum pump (42) is activated, common foul air inlet valve (41) is set to allow partially cleaned foul air to be pumped back to foul air inlet (3) via fallback branch (45). Other inlets, outlets and internal components of absorption/desorption tank (1) are not shown in Figures 24, 25, and 26.

Figure 27 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves opening foul air inlet valve (4a) to allow the partially cleaned foul air to flow out of foul air inlet (3a) and running foul air pump (14a) in reverse such that it removes the partially cleaned foul air from absorption/desorption tank (1a) and pumps it back to common foul air inlet (3), allowing it to be cleaned by an alternative air cleaning circuit. Optionally, sensors in absorption/desorption tank (1a) monitors tank pressure to ensure that a low pressure vent does not cause desorption. When the partially cleaned foul air has been sufficiently voided, the circuit switches to desorption mode. In an alternative embodiment of Figure 27, circuit-specific foul air inlet valve and pump arrangement (46a, 46b, 46c) may be replaced with an alternative valve and pump arrangement as shown in Figures 24 - 26.

Figure 28 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves opening foul air inlet valve (4a) to allow the partially cleaned foul air to flow out of foul air inlet (3a) and running foul air pump (14a) in reverse such that it removes the partially cleaned foul air from absorption/desorption tank (1a) and pumps it back to common foul air inlet (3), allowing it to be cleaned by an alternative air cleaning circuit. In an alternative embodiment of Figure 28, circuit-specific foul air inlet valve and pump arrangements (46a, 46b, 46c) may be replaced with an alternative valve and pump arrangement as shown in Figures 24 - 27.

Figure 29 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves opening common valve (19a) to allow the partially cleaned foul air to flow out of common absorption/desorption tank inlet / outlet (21a) and running common pump (20a) such that it removes the partially cleaned foul air from absorption/desorption tank (1a) and pumps it back to common foul air inlet (3), allowing it to be cleaned by an alternative air cleaning circuit.

Figure 30 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves closing foul air inlet valve (4a), closing valve (5a), opening valve (8a) to establish a connection between absorption/desorption tank (1a) and fallback line (47) and activating common fallback pump (48) such that partially cleaned foul air is pumped from absorption/desorption tank (1a) back to common foul air inlet (3) allowing it to be cleaned by an alternative air cleaning circuit. One-way fallback valve (49) prevents backflow of foul air from foul air inlet (3) to fallback line (47).

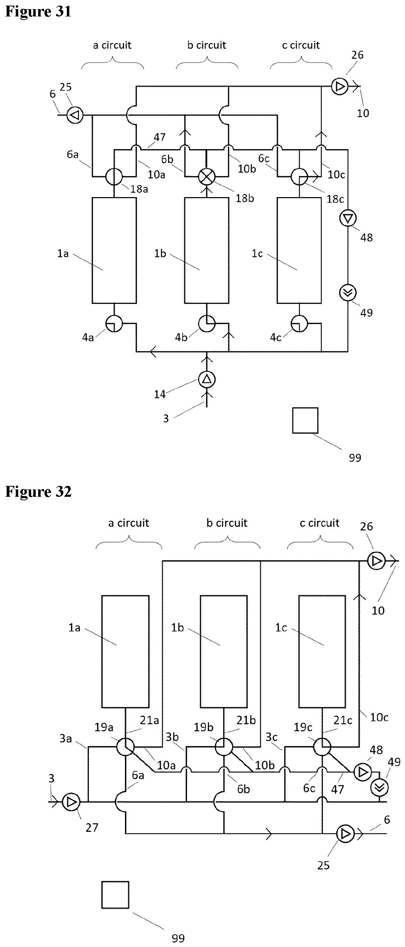

Figure 31 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves closing foul air inlet valve (4a), opening valve (18a) to establish a connection between absorption/desorption tank (1a) and fallback line (47) and activating common fallback pump (48) such that partially cleaned foul air is pumped from absorption/desorption tank (1a) back to common foul air inlet (3) allowing it to be cleaned by an alternative air cleaning circuit. One-way fallback valve (49) prevents backflow of foul air from foul air inlet (3) to fallback line (47).

Figure 32 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves setting common valve (19a) to establish a connection between absorption/desorption tank (1a) and fallback line (47) and activating common fallback pump (48) such that partially cleaned foul air is pumped from absorption/desorption tank (1a) back to common foul air inlet (3) allowing it to be cleaned by an alternative air cleaning circuit. One-way fallback valve (49) prevents backflow of foul air from foul air inlet (3) to fallback line (47).

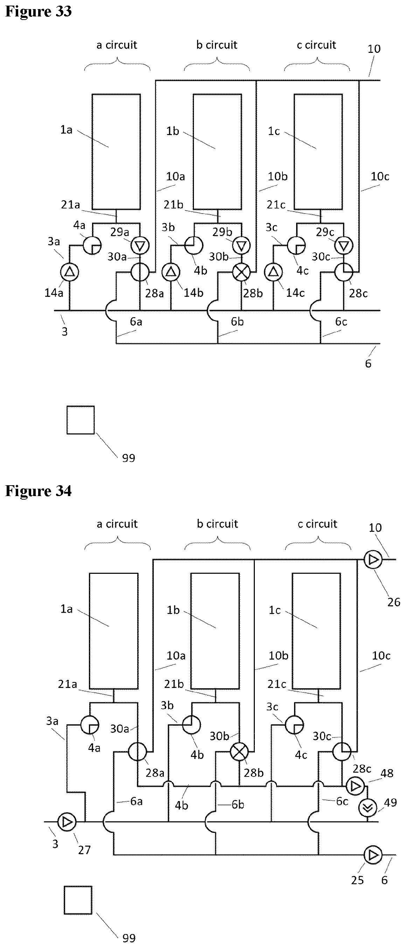

Figure 33 shows an embodiment of an air purification system with three circuits. The a-circuit is in absorption/desorption tank fallback mode, the b-circuit is in absorption mode and the c-circuit is in desorption mode. For the a-circuit, pressure chamber fallback mode involves closing foul air inlet valve (4a), opening valve (28a) to connect absorption/desorption tank (1) back to foul air inlet (3) and activating pump (29a) to pump partially cleaned foul air from absorption/desorption tank (1a) to foul air inlet (3) allowing it to be cleaned by an alternative air cleaning circuit.

Figure 34 shows an embodiment of an air purification system with three circuits. The a-circuit is in absorption/desorption tank fallback mode, the b-circuit is in absorption mode and the c-circuit is in desorption mode. For the a-circuit, absorption/desorption tank fallback mode involves closing foul air inlet valve (4a), opening valve (28a) to connect absorption/desorption tank (1) to fallback line (47) and activating common fallback pump (48) such that partially cleaned foul air is pumped from absorption/desorption tank (1a) back to common foul air inlet (3) allowing it to be cleaned by an alternative air cleaning circuit. One-way fallback valve (49) prevents backflow of foul air from foul air inlet (3) to fallback line (47).

In isolated mode, all inlets to and outlets from the circuit's absorption/desorption tank are closed and all circuit specific pumps are deactivated, effectively isolating the circuit from the rest of the air purification system. Should the overall system have an excess of air purification capacity, isolating one or more circuits in this way will reduce system capacity to an appropriate level. In addition, if a specific circuit develops a fault, isolating a circuit will prevent this fault from impacting the overall air quality, save a small reduction in air purification capacity. Isolated mode may also be used during maintenance, to allow work within the isolated circuit without it impacting the overall air purification system.

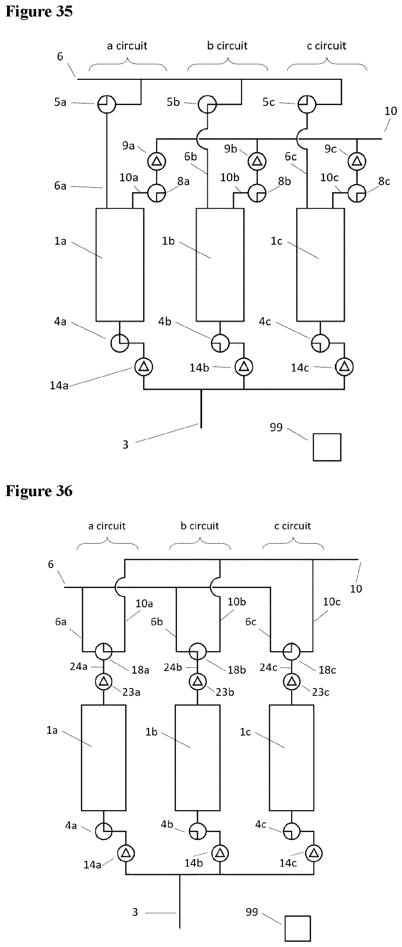

Figure 35 shows an example of three interconnected air purification circuits (a, b, c) of a first embodiment. The a-circuit is in absorption mode, the b-circuit is in clean air discharge mode and the c-circuit is in isolated mode. For simplicity, the internal elements of the absorption/desorption tanks (1a, 1b, 1c) are not shown. In the illustrated embodiment, one foul air input pump is used per circuit; in alternative embodiments, a single pump may be shared between all circuits or foul air inlets pumps may be shared between one or more circuits. The a-circuit, which is in absorption mode, has foul air inlet valve (4a) open to allow foul air to be pumped into absorption/desorption tank (1a) using foul air input pump (14a). Clean air discharge valve (5a) and pollutant discharge valve (8a) are both closed, ensuring that pressure can build up within absorption/desorption tank 1a. The b-circuit, which is in clean air discharge mode, has foul air inlet valve (4b) closed to prevent the ingress of foul air and pollutant discharge valve (8b) closed to prevent the egress of clean air through the incorrect channel. Clean air discharge valve (5b) is open to allow clean air to egress via clean air outlet (6b - 6). In an additional embodiment, a further pump may be placed on the master clean air outlet (6) or the circuit-specific clean air outlets (6a, 6b, 6c) to assist with clean air egress. The c-circuit, which is in isolated mode, has foul air inlet valve (4c) closed, clean air discharge valve (5c) and pollutant discharge valve (8c) closed, thereby isolating absorption/desorption tank (1c).

Figure 36 shows an example of three interconnected air purification circuits of a second embodiment. The a-circuit is in absorption mode, the b-circuit is in clean air discharge mode and the c-circuit is in isolated mode. For simplicity, the internals of the absorption/desorption tanks (1a, 1b, 1c) are not shown. In the illustrated embodiment, a single foul air inlet pump is used; in alternative embodiments, one foul air inlet pump per circuit may be used or foul air inlets pumps may be shared between circuits. Multipurpose valves (18a, 18b, 18c) may be in one of three positions: clean air discharge position, whereby absorption/desorption tank discharge line (24a, 24b, 24c) is connected to circuit clean air outlet (6a, 6b, 6c); desorption position, whereby absorption/desorption tank discharge line (24a, 24b, 24c) is connected to the relevant circuit pollutant outlet (10a, 10b, 10c); and sealed position, whereby the valve blocks egress from the corresponding absorption/desorption chamber, this mode may be used when the corresponding circuit is in absorption mode or in isolated mode. The a-circuit, which is in absorption mode, has foul air inlet valve (4a) open to allow foul air to be pumped into absorption/desorption tank (1a) using foul air input pump (14a). Valve (18a) is in its sealed position and vacuum pump (23a) is deactivated, allowing pressure to build up within absorption/desorption tank 1a. The b-circuit, which is in clean air discharge mode, has foul air inlet valve (4b) closed to prevent the ingress of foul air and to prevent the egress of clean air through the incorrect channel. Valve (18b) is set in its clean air discharge position, allowing clean air to discharge via circuit clean air outlet (6b) into master clean air outlet (6), assisted by vacuum pump (23b). The c-circuit, which is in isolated mode, has foul air inlet valve (4c) closed and multipurpose valve (18c) is set in its sealed position, thereby isolating absorption/desorption tank (1c). Circuit-specific foul air input pump (14c) and circuit-specific vacuum pump (23c) are deactivated.

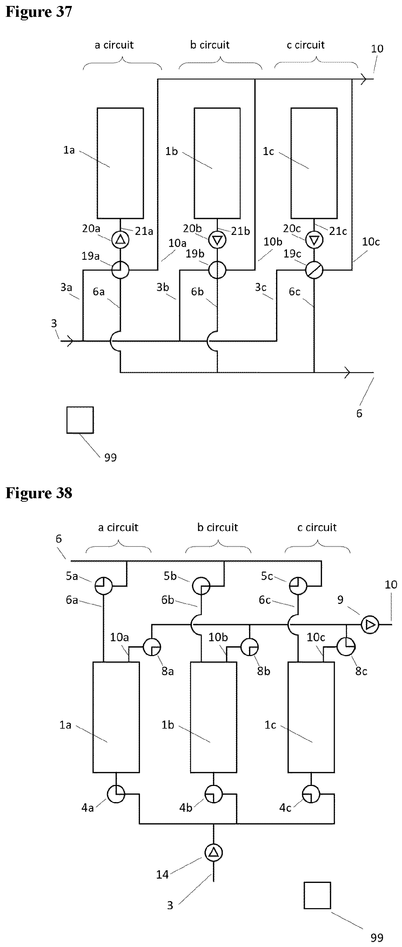

Figure 37 shows an example of three interconnected air purification circuits of a third embodiment. The a-circuit is in absorption mode, the b-circuit is in clean air discharge mode and the c-circuit is in isolated mode. For simplicity, the internals of the absorption/desorption tanks (1a, 1b, 1c) are not shown. Common valves (19a, 19b, 19c) may be in one of four positions: foul air input position, whereby foul air circuit inlet (3a, 3b, 3c) is connected to corresponding common pump (20a, 20b, 20c); clean air discharge position, whereby circuit clean air outlet (6a, 6b, 6c) is connected to corresponding common pump (20a, 20b, 20c); desorption position, whereby circuit pollutant outlet (10a, 10b, 10c) is connected to corresponding common pump (20a, 20b, 20c); and sealed, whereby the valve blocks intake and exhaust to the corresponding absorption/desorption chamber, thereby isolating that circuit. The a-circuit, which is in absorption mode, has common valve (19a) set to foul air input position, allowing common pump (20a) to pump in foul air to absorption/desorption tank (1a) via circuit foul air inlet (3a) and master foul air inlet (3). The b-circuit, which is in clean air discharge mode, has common valve (19b) set to clean air discharge position, allowing common pump (20b) to pump clean air from absorption/desorption tank (1b) to master clean air outlet (6) via circuit clean air outlet (6b). The c-circuit, which is in isolated mode, has common valve (19c) set to its sealed position, thereby isolating the c-circuit. Common pump (20c) is deactivated.

Figure 38 sets out an alternative embodiment of Figure 35, where circuit-specific foul air input pumps 14a, 14b, 14c are replaced by common foul air input pump (14) and circuit-specific pollutant pumps (9a, 9b, 9c) are replaced with common pollutant pump (9). An optional clean air outlet pump (not shown) may be placed on the clean air outlet (6). For installations with multiple circuits, this embodiment will reduce the number of pumps required. Alternatives to this embodiment (not illustrated) allow for common pumps on one or more of these circuits.

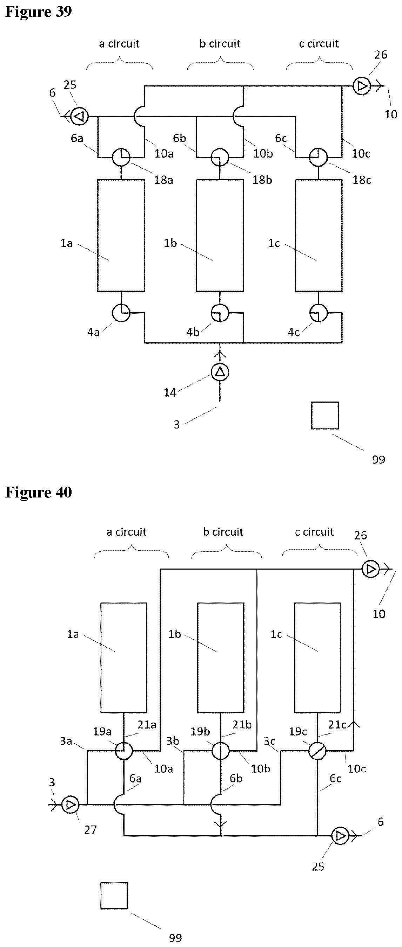

Figure 39 sets out an alternative embodiment of Figure 36, where circuit-specific pumps 14a, 14b, 14c, 23a, 23b, 23c are replaced with shared pumps. Clean air outlet pump (25) is placed on the clean air outlet (6) and is provides pumping for all circuits which are in clean air discharge mode. Pollutant pump (26) is placed on the pollutant outlet (10) and provides pumping for all circuits which are in desorption mode. For installations which use more than three circuits, this embodiment will reduce the number of pumps required.

Figure 40 sets out an alternative embodiment of Figure 37, where circuit-specific pumps 20a, 20b, 20c are replaced with shared pumps. Foul air input pump (27) is placed on the foul air inlet (3) and provides input pumping for all circuits which are in absorption mode. Clean air outlet pump (25) is placed on the clean air outlet (6) and is provides pumping for all circuits which are in clean air discharge mode. Pollutant pump (26) is placed on the pollutant outlet (10) and provides pumping for all circuits which are in desorption mode. For installations which use more than three circuits, this embodiment will reduce the number of pumps required.

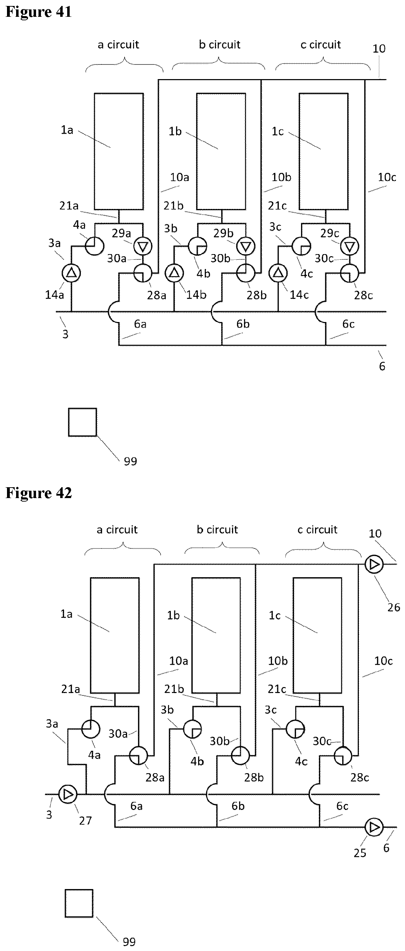

Figure 41 shows an example of three interconnected air purification circuits of the fourth embodiment. The a-circuit is in absorption mode, the b-circuit is in clean air discharge mode and the c-circuit is in isolated mode. For simplicity, the internals of the absorption/desorption tanks (1a, 1b, 1c) are not shown. Foul air inlet valves (4a, 4b, 4c) may be switchable valves which switch between open and closed or they may be simple one-way pressure-resist valves which allow foul air to flow into absorption/desorption tank (1) but not out of it. Valves (28a, 28b, 28c) may be in one of three positions: sealed, whereby cleaned air or pollutants cannot flow from common absorption/desorption tank inlet/outlet (21a, 21b, 21c) to either circuit clean air outlets (6a, 6b, 6c) or circuit pollutant outlets (10a, 10b, 10c); clean air discharge, whereby a fluid circuit is established between from common absorption/desorption tank inlet/outlet (21a, 21b, 21c) and the appropriate clean air outlet (6a, 6b, 6c); pollutant discharge whereby a fluid circuit is established between from common absorption/desorption tank inlet/outlet (21a, 21b, 21c) and the corresponding pollutant outlet (10a, 10b, 10c). The a-circuit, is in absorption mode. Foul air input pump (14a) pumps foul air from foul air inlet (3); foul air inlet valve (4a) establishes a fluid circuit between foul air input pump (14a) and absorption/desorption tank (1a) via circuit foul air inlet (3a), allowing foul air to be pumped into absorption/desorption tank (1a), where it is cleaned in the aforementioned manner. Valve (28a) is closed preventing discharge and allowing pressure build up in absorption/desorption tank (1a). The b-circuit is in clean air discharge mode. Foul air input pump (14b) is deactivated and foul air inlet valve (4b) seals circuit foul air inlet (3b). Valve (28b) establishes a fluid connection between absorption/desorption tank (1b) and circuit clean air outlet (6b), closing off pollutant outlet (10b) in the process. Pump (29b) pumps clean air from absorption/desorption tank (1b) to circuit clean air outlet (6b). The c-circuit is in isolated mode. Foul air input pump (14c) is deactivated and foul air inlet valve (4c) seals circuit foul air inlet (3c). Valve (28c) is sealed, closing off the circuit clean air outlet (6c) and pollutant outlet (10c). Pumps (14c, 29c) are deactivated.

Figure 42 presents an alternative embodiment of Figure 41 where circuit-specific foul air input pumps (14a, 14b, 14c) and pumps (29a, 29b, 29c) are replaced with shared foul air input pump (27), shared clean air output pump (25) and shared pollutant pump (26). The a-circuit is in absorption mode, the b-circuit is in clean air discharge mode and the c-circuit is in isolated mode. For simplicity, the internals of the absorption/desorption tanks (1a, 1b, 1c) are not shown. The a-circuit is in absorption mode. Foul air input pump (27) pumps foul air from foul air inlet (3); foul air inlet valve (4a) establishes a fluid circuit between foul air input pump (27) and absorption/desorption tank (1a) via circuit foul air inlet (3a), allowing foul air to be pumped into absorption/desorption tank (1a), where it is cleaned in the aforementioned manner. Valve (28a) is closed preventing discharge and allowing pressure build up in absorption/desorption tank (1a). The b-circuit is in clean air discharge mode. Foul air inlet valve (4b) seals circuit foul air inlet (3b). Valve (28b) establishes a fluid connection between absorption/desorption tank (1b) and circuit clean air outlet (6b), closing off pollutant outlet (10b) in the process. Clean air outlet pump (25) pumps clean air from absorption/desorption tank (1b) to common clean air outlet (6) via circuit clean air outlet (6b). The c-circuit is in isolated mode. Foul air inlet valve (4c) seals circuit foul air inlet line (3c) and valve (28c) is closed, sealing pollutant outlet (10c) and circuit clean air outlet (6c). Figure 41 and Figure 42 show embodiments where all pumps are circuit-specific (Figure 41) or all pumps are shared between circuits (Figure 42). Other embodiments are also possible where some pumps are circuit-specific and some are shared between circuits.

Each air purification circuit may optionally include a secondary circulation loop, comprising secondary circulation inlets and outlets, a secondary circulation line and a secondary circulation pump. During absorption mode or dwell mode, the absorption/desorption tank is pressurised with foul air and pollutants bind to the absorber. When pressurised, however, there may be insufficient movement of the pressurised foul air leading to the formation of a depleted boundary layer between the foul air and the absorber. To address this, foul air can be pumped from one part of the absorption/desorption tank to another using a secondary circulation loop; this will have the effect of creating pressurised or disrupted foul airflow over the absorber and increasing the overall level of contact between the foul air and the absorber.

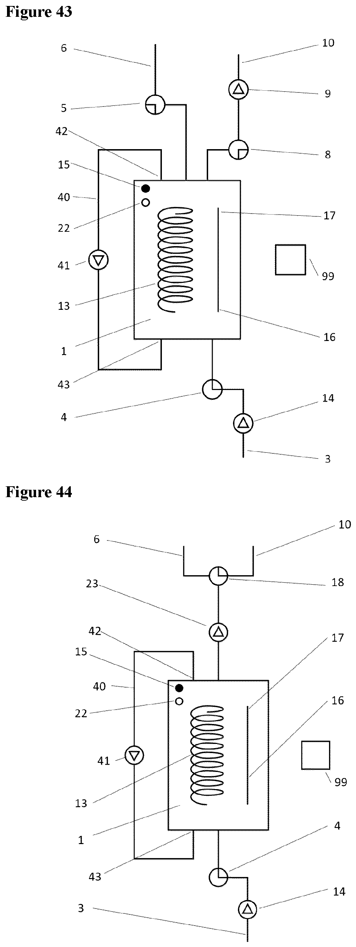

Figure 43 shows a single air purification circuit of according to the first embodiment described above first embodiment in absorption mode. Absorption/desorption tank (1) includes a solid or porous absorption media (16). Foul air containing pollutants enters via foul air inlet (3), assisted by foul air input pump (14); foul air inlet valve (4) is open to the airflow and exit valves (5, 8) are closed to the airflow, causing the foul air to become pressurised in absorption/desorption tank (1) where pollutants are removed by absorption media (16). Optional heat exchanger (13) may be used to cool the absorption media (16) or foul air in order to increase absorption efficiency. In this illustration, foul air input pump (14) is placed before foul air inlet valve (4); this positioning may be reversed. Also in this illustration, pollutant pump (9) is placed after valve (8); this positioning may also be reversed. Optionally, a pump may be added to clean air outlet (6), either before or after valve (5). The air purification circuit includes secondary circulation loop comprising pressure chamber inlet/outlet A (42), pressure chamber inlet/outlet B (43), secondary circulation line (40) and secondary circulation pump (41). During absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

Figure 44 shows a single air purification circuit according to the second embodiment described above, which uses a common outlet for clean air and discharged pollutants, thereby reducing part count, installation complexity, space requirements and capital cost. Valve (18) has three positions: closed, open to clean air outlet (6) and open to pollutant outlet (10). In absorption mode, foul air inlet valve (4) is open and foul air enters via foul air inlet (3) and is pressurised in absorption/desorption tank (1) by foul air input pump (14). Vacuum pump (23) is deactivated and valve (18) is closed, ensuring pressure build up within absorption/desorption tank (1). In clean air discharge mode, foul air inlet valve (4) is closed and foul air input pump (14) is deactivated, preventing the exit of clean air through foul air inlet (3); valve (18) is opened to allow the pressurised clean air to exit via clean air outlet (6); vacuum pump (23) is activated to drive clean air from absorption/desorption tank (1) to clean air outlet (6). In desorb mode (shown), foul air inlet valve (4) is closed and foul air input pump (14) is deactivated, preventing the exit of pollutants through foul air inlet (3); valve (18) is opened to allow pollutants to exit via pollutant outlet (10); vacuum pump (23) is activated creating a vacuum in absorption/desorption tank (1) which enhances desorption; extracted pollutants exit absorption/desorption tank (1), pass through valve (18) and exit the system via pollutant outlet (10). The air purification circuit includes secondary circulation loop comprising pressure chamber inlet/outlet A (42), pressure chamber inlet/outlet B (43), secondary circulation line (40) and secondary circulation pump (41). During absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

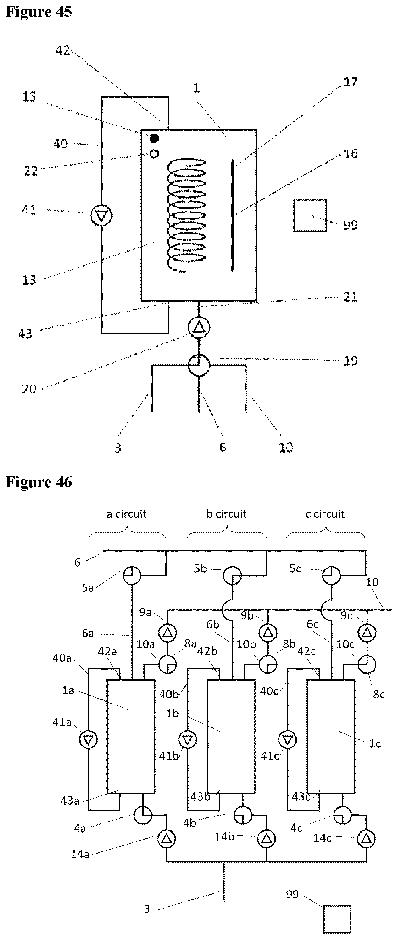

Figure 45 shows a single air purification circuit according to the third embodiment described above, which uses a common inlet/outlet for all modes, further reducing part count, installation complexity, space requirements and capital costs. In this embodiment, common inlet / outlet (21) provides a single channel into / out from absorption/desorption tank (1). Common pump (20) is used to pressurise and vent absorption/desorption tank (1). Common valve (19) is used to switch gas flow between foul air inlet (3), clean air outlet (6) and pollutant outlet (10). In absorption mode, common pump (20) is activated to pressurise absorption/desorption tank (1), common valve (19) is set to allow foul air to enter absorption/desorption tank (1) via foul air inlet (3); pressurised foul air has pollutants removed in absorption/desorption tank (1) in the manner previously described. In clean air discharge mode, common pump (20) is used to vent absorption/desorption tank (1), common valve (19) is set to allow clean air to exit absorption/desorption tank (1) via clean air outlet (6). In desorb mode, common pump (20) is used to vent and create a vacuum in absorption/desorption tank (1), common valve (19) is set to allow pollutants to be evacuated via pollutant outlet (10).

The air purification circuit includes secondary circulation loop comprising pressure chamber inlet/outlet A (42), pressure chamber inlet/outlet B (43), secondary circulation line (40) and secondary circulation pump (41). During absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

Optionally during the dwell stage, the circuit may activate its secondary circulation loop to improve contact between the foul air and the absorber.

Figure 46 shows an example of three interconnected air purification circuits (a, b, c) of the first embodiment. The a-circuit is in absorption mode, the b-circuit is in clean air discharge mode and the c-circuit is in desorption mode. For simplicity, the internal elements of the absorption/desorption tanks (1a, 1b, 1c) are not shown. In the illustrated embodiment, one foul air input pump is used per circuit; in alternative embodiments, a single pump may be shared between all circuits or foul air inlets pumps may be shared between one or more circuits.

The a-circuit, which is in absorption mode, has foul air inlet valve (4a) open to allow foul air to be pumped into absorption/desorption tank (1a) using foul air input pump (14a). Clean air discharge valve (5a) and pollutant discharge valve (8a) are both closed, ensuring that pressure can build up within absorption/desorption tank 1a.

The b-circuit, which is in clean air discharge mode, has foul air inlet valve (4b) closed to prevent the ingress of foul air and pollutant discharge valve (8b) closed to prevent the egress of clean air through the incorrect channel. Clean air discharge valve (5b) is open to allow clean air to egress via clean air outlet (6b - 6). In an additional embodiment, a further pump may be placed on the master clean air outlet (6) or the circuit-specific clean air outlets (6a, 6b, 6c) to assist with clean air egress.

The c-circuit, which is in desorption mode, has both foul air inlet valve (4c) closed and clean air discharge valve (5c) closed to prevent the egress of pollutants through the incorrect channel. Pollutant discharge valve (8c) is opened and pollutant pump (9c) is activated to desorb the absorption media in the way previously discussed. Desorbed pollutant egresses from absorption/desorption tank (1c) to common pollutant outlet (10) via circuit pollutant outlet (10c), valve (8c) and circuit pollutant pump (9c).

Each circuit includes secondary circulation loop comprising pressure chamber inlet/outlet A (42a, 42b, 42c), pressure chamber inlet/outlet B (43a, 43b, 43c), secondary circulation line (40a, 40b, 40c) and secondary circulation pump (41a, 41b, 41c). When a circuit is in absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

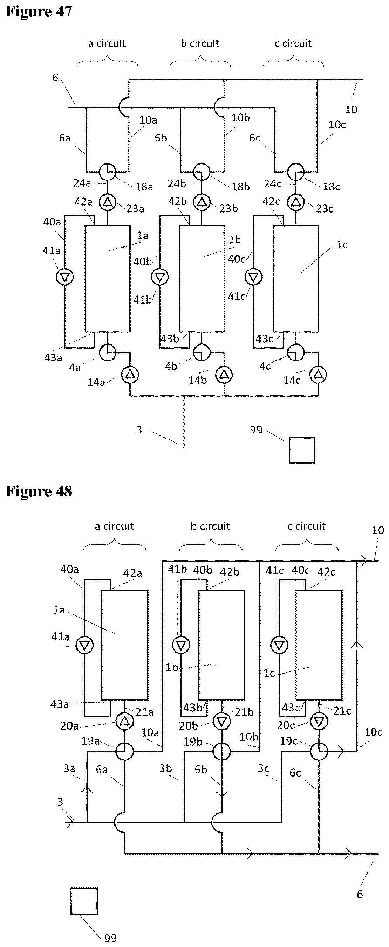

Figure 47 shows an example of three interconnected air purification circuits of the second embodiment. The a-circuit is in absorption mode, the b-circuit is in clean air discharge mode and the c-circuit is in desorption mode. For simplicity, the internals of the absorption/desorption tanks (1a, 1b, 1c) are not shown. In the illustrated embodiment, a single foul air inlet pump is used; in alternative embodiments, one foul air inlet pump per circuit may be used or foul air inlets pumps may be shared between circuits.

Multipurpose valves (18a, 18b, 18c) may be in one of three positions: clean air discharge position, whereby absorption/desorption tank discharge line (24a, 24b, 24c) is connected to circuit clean air outlet (6a, 6b, 6c); desorption position, whereby absorption/desorption tank discharge line (24a, 24b, 24c) is connected to the relevant circuit pollutant outlet (10a, 10b, 10c); and sealed position, whereby the valve blocks egress from the corresponding absorption/desorption chamber, this mode may be used when the corresponding circuit is in absorption mode.

The a-circuit, which is in absorption mode, has foul air inlet valve (4a) open to allow foul air to be pumped into absorption/desorption tank (1a) using foul air input pump (14a). Valve (18a) is in its sealed position and vacuum pump (23a) is deactivated, allowing pressure to build up within absorption/desorption tank 1a.

The b-circuit, which is in clean air discharge mode, has foul air inlet valve (4b) closed to prevent the ingress of foul air and to prevent the egress of clean air through the incorrect channel. Valve (18b) is set in its clean air discharge position, allowing clean air to discharge via circuit clean air outlet (6b) into master clean air outlet (6), assisted by vacuum pump (23b).

The c-circuit, which is in desorption mode, has foul air inlet valve (4c) closed to prevent the egress of pollutants through the incorrect channel. Valve (18c) is set in its desorption position, allowing desorbed pollutant to discharge via circuit pollutant outlet (10c) into master pollution outlet (10), assisted by vacuum pump (23c).

Each circuit includes secondary circulation loop comprising pressure chamber inlet/outlet A (42a, 42b, 42c), pressure chamber inlet/outlet B (43a, 43b, 43c), secondary circulation line (40a, 40b, 40c) and secondary circulation pump (41a, 41b, 41c). When a circuit is in absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

Figure 48 shows an example of three interconnected air purification circuits of the third embodiment. The a-circuit is in absorption mode, the b-circuit is in clean air discharge mode and the c-circuit is in desorption mode. For simplicity, the internals of the absorption/desorption tanks (1a, 1b, 1c) are not shown. Common valves (19a, 19b, 19c) may be in one of four positions: foul air input position, whereby foul air circuit inlet (3a, 3b, 3c) is connected to corresponding common pump (20a, 20b, 20c); clean air discharge position, whereby circuit clean air outlet (6a, 6b, 6c) is connected to corresponding common pump (20a, 20b, 20c); desorption position, whereby circuit pollutant outlet (10a, 10b, 10c) is connected to corresponding common pump (20a, 20b, 20c); and sealed, whereby the valve blocks intake and exhaust to the corresponding absorption/desorption chamber, thereby isolating that circuit. The a-circuit, which is in absorption mode, has common valve (19a) set to foul air input position, allowing common pump (20a) to pump in foul air to absorption/desorption tank (1a) via circuit foul air inlet (3a) and master foul air inlet (3). The b-circuit, which is in clean air discharge mode, has common valve (19b) set to clean air discharge position, allowing common pump (20b) to pump clean air from absorption/desorption tank (1b) to master clean air outlet (6) via circuit clean air outlet (6b). The c-circuit, which is in desorption mode, has common valve (19c) set to desorption position, allowing common pump (20c) to pump pollutant from absorption/desorption tank (1c) to master pollutant outlet (10) via circuit pollutant outlet (10c). Each circuit includes secondary circulation loop comprising pressure chamber inlet/outlet A (42a, 42b, 42c), pressure chamber inlet/outlet B (43a, 43b, 43c), secondary circulation line (40a, 40b, 40c) and secondary circulation pump (41a, 41b, 41c). When a circuit is in absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

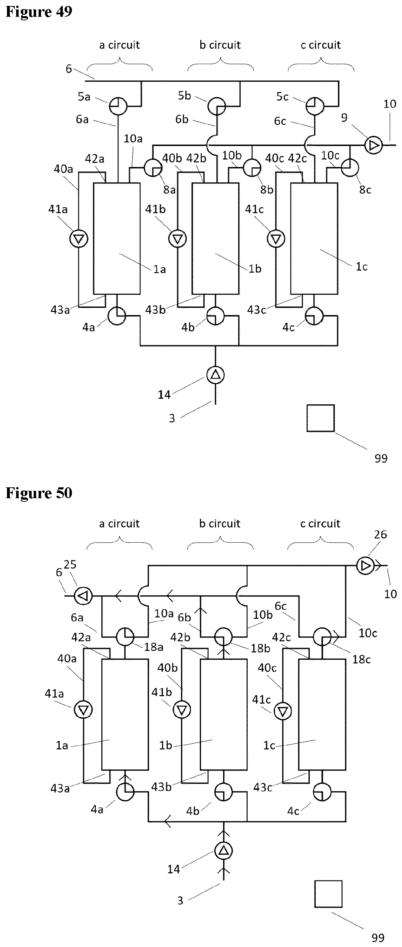

Figure 49 sets out an alternative embodiment of Figure 48, where circuit-specific foul air input pumps 14a, 14b, 14c are replaced by common foul air input pump (14) and circuit-specific pollutant pumps (9a, 9b, 9c) are replaced with common pollutant pump (9). An optional clean air outlet pump (not shown) may be placed on the clean air outlet (6). For installations with multiple circuits, this embodiment will reduce the number of pumps required. Alternatives to this embodiment (not illustrated) allow for common pumps on one or more of these circuits.

Figure 50 sets out an alternative embodiment of Figure 49, where circuit-specific pumps 14a, 14b, 14c, 23a, 23b, 23c are replaced with shared pumps. Clean air outlet pump (25) is placed on the clean air outlet (6) and is provides pumping for all circuits which are in clean air discharge mode. Pollutant pump (26) is placed on the pollutant outlet (10) and provides pumping for all circuits which are in desorption mode. For installations which use more than three circuits, this embodiment will reduce the number of pumps required.

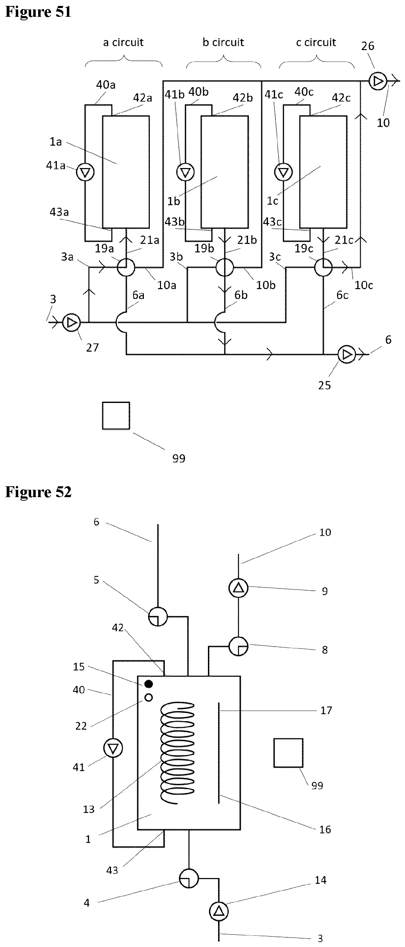

Figure 51 sets out an alternative embodiment of Figure 50, where circuit-specific pumps 20a, 20b, 20c are replaced with shared pumps. Foul air input pump (27) is placed on the foul air inlet (3) and provides input pumping for all circuits which are in absorption mode. Clean air outlet pump (25) is placed on the clean air outlet (6) and is provides pumping for all circuits which are in clean air discharge mode. Pollutant pump (26) is placed on the pollutant outlet (10) and provides pumping for all circuits which are in desorption mode. For installations which use more than three circuits, this embodiment will reduce the number of pumps required.

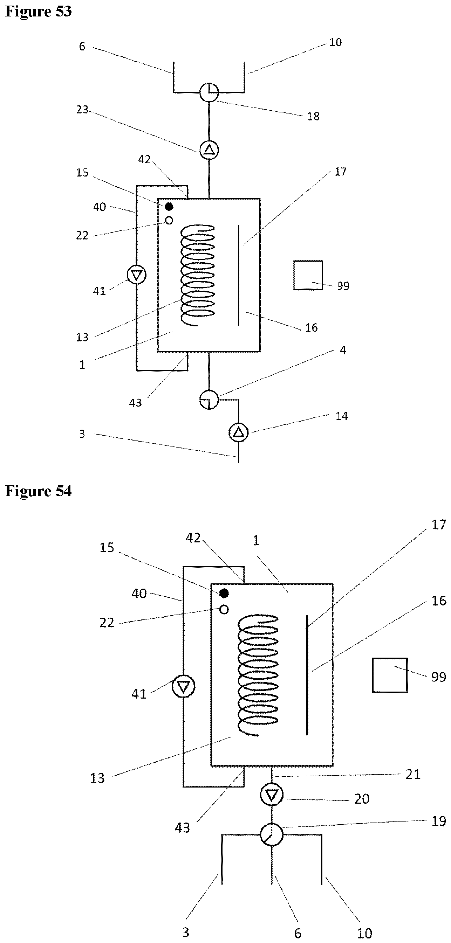

Figures 52 - 54 show the first, second and third embodiments in dwell mode. Dwell mode is used when absorption/desorption tank (1) pressure is approaching or at its maximum and the pollutant level has not dropped to an acceptable level to allow the cleaned air to be vented. The circuit will remain in dwell mode until such time as the pollutant level falls to an acceptable level or a time threshold is exceeded. In dwell mode, all pumps specific to the dwelling circuit are deactivated and all valves into and out of absorption/desorption tank are set to their closed positions, thereby sealing the foul air in absorption/desorption tank (1) for cleaning. In topologies where pumps are shared between circuits, the shared pumps may remain active and the dwelling circuit be isolated by its valves alone.

Optionally during dwell mode, the circuit may activate its secondary circulation loop to improve contact between the foul air and the absorber in the manner previously described.

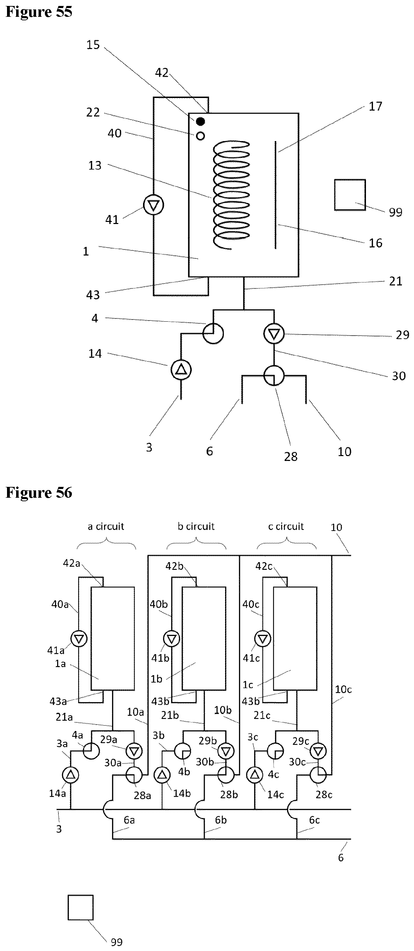

Figure 55 shows a fourth embodiment of a single air purification circuit using a common absorption/desorption tank inlet/outlet (21) and separate pumps for generating absorption/desorption tank pressure and vacuum, shown in absorption mode. Common absorption/desorption tank inlet/outlet (21) connects absorption/desorption tank (1), foul air inlet valve (4) and vacuum pump (29). In absorption mode (shown), foul air inlet (3) is connected to foul air input pump (14) which can pump foul air into absorption/desorption tank (1) through foul air inlet valve (4) and common absorption/desorption tank inlet/outlet (21). Foul air inlet valve (4) may be a switchable valve or a simple one-way valve which allows foul air to flow into absorption/desorption tank (1) but not out of it. Valve (28) is closed to prevent the outflow of foul air into the clean air outlet (6) or pollutant outlet (10). In clean air discharge mode, foul air inlet valve (4) is closed, either by switching or by pressure against its mechanism, valve (28) is opened to allow cleaned air to flow from absorption/desorption tank (1) to clean air outlet (6), aided by vacuum pump (29), via common absorption/desorption tank inlet/outlet (21) and common outlet line (30). In desorption mode, foul air inlet valve (4) is closed, either by switching or by pressure against its mechanism, valve (28) is opened to allow pollutant to flow from absorption/desorption tank (1) to pollutant outlet (10) via common absorption/desorption tank inlet/outlet (21) and common outlet line (30). Vacuum pump (29) provides sufficient vacuum to encourage effective desorption; optionally desorption may be assisted by heat. The air purification circuit includes secondary circulation loop comprising pressure chamber inlet/outlet A (42), pressure chamber inlet/outlet B (43), secondary circulation line (40) and secondary circulation pump (41). During absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

Figure 56 shows an example of three interconnected air purification circuits of the fourth embodiment. The a-circuit is in absorption mode, the b-circuit is in clean air discharge mode and the c-circuit is in desorption mode. For simplicity, the internals of the absorption/desorption tanks (1a, 1b, 1c) are not shown. Foul air inlet valves (4a, 4b, 4c) may be switchable valves which switch between open and closed or they may be simple one-way pressure-resist valves which allow foul air to flow into absorption/desorption tank (1) but not out of it. Valves (28a, 28b, 28c) may be in one of three positions: closed, whereby cleaned air or pollutants cannot flow from common absorption/desorption tank inlet/outlet (21a, 21b, 21c) to either circuit clean air outlets (6a, 6b, 6c) or circuit pollutant outlets (10a, 10b, 10c); clean air discharge, whereby a fluid circuit is established between from common absorption/desorption tank inlet/outlet (21a, 21b, 21c) and the appropriate clean air outlet (6a, 6b, 6c); pollutant discharge whereby a fluid circuit is established between from common absorption/desorption tank inlet/outlet (21a, 21b, 21c) and the corresponding pollutant outlet (10a, 10b, 10c). The a-circuit, is in absorption mode. Foul air input pump (14a) pumps foul air from foul air inlet (3); foul air inlet valve (4a) establishes a fluid circuit between foul air input pump (14a) and absorption/desorption tank (1a) via circuit foul air inlet (3a), allowing foul air to be pumped into absorption/desorption tank (1a), where it is cleaned in the aforementioned manner. Valve (28a) is closed preventing discharge and allowing pressure build up in absorption/desorption tank (1a). The b-circuit is in clean air discharge mode. Foul air input pump (14b) is deactivated and foul air inlet valve (4b) seals circuit foul air inlet (3b). Valve (28b) establishes a fluid connection between absorption/desorption tank (1b) and circuit clean air outlet (6b), closing off pollutant outlet (10b) in the process. Pump (29b) pumps clean air from absorption/desorption tank (1b) to circuit clean air outlet (6b). The c-circuit is in desorption mode. Foul air input pump (14c) is deactivated and foul air inlet valve (4c) seals circuit foul air inlet (3c). Valve (28c) establishes a fluid connection between absorption/desorption tank (1b) and pollutant outlet (10c), closing off circuit clean air outlet (6c) in the process. Pump (29c) creates low pressure in absorption/desorption tank (1c), causing desorption and vents pollutant to pollutant outlet (10c). Each circuit includes secondary circulation loop comprising pressure chamber inlet/outlet A (42a, 42b, 42c), pressure chamber inlet/outlet B (43a, 43b, 43c), secondary circulation line (40a, 40b, 40c) and secondary circulation pump (41a, 41b, 41c). When a circuit is in absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1).

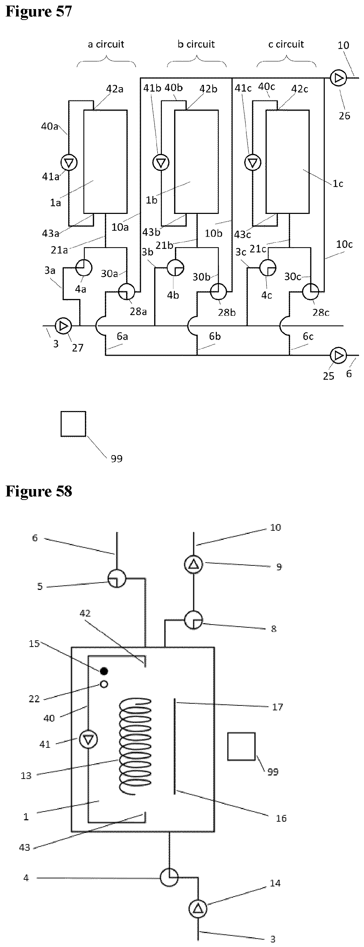

Figure 57 presents an alternative embodiment of Figure 58 where circuit-specific foul air input pumps (14a, 14b, 14c) and pumps (29a, 29b, 29c) are replaced with shared foul air input pump (27), shared clean air output pump (25) and shared pollutant pump (26). The a-circuit is in absorption mode, the b-circuit is in clean air discharge mode and the c-circuit is in desorption mode. For simplicity, the internals of the absorption/desorption tanks (1a, 1b, 1c) are not shown. The a-circuit is in absorption mode. Foul air input pump (27) pumps foul air from foul air inlet (3); foul air inlet valve (4a) establishes a fluid circuit between foul air input pump (27) and absorption/desorption tank (1a) via circuit foul air inlet (3a), allowing foul air to be pumped into absorption/desorption tank (1a), where it is cleaned in the aforementioned manner. Valve (28a) is closed preventing discharge and allowing pressure build up in absorption/desorption tank (1a). The b-circuit is in clean air discharge mode. Foul air inlet valve (4b) seals circuit foul air inlet (3b). Valve (28b) establishes a fluid connection between absorption/desorption tank (1b) and circuit clean air outlet (6b), closing off pollutant outlet (10b) in the process. Clean air outlet pump (25) pumps clean air from absorption/desorption tank (1b) to common clean air outlet (6) via circuit clean air outlet (6b). The c-circuit is in desorption mode. Foul air inlet valve (4c) seals circuit foul air inlet line (3c). Valve (28c) establishes a fluid connection between absorption/desorption tank (1b) and pollutant outlet (10c), closing off circuit clean air outlet (6c) in the process. Pollutant pump (26) creates low pressure in absorption/desorption tank (1c), causing desorption and vents pollutant to pollutant outlet (10) via circuit-specific pollutant outlet (10c). Each circuit includes secondary circulation loop comprising pressure chamber inlet/outlet A (42a, 42b, 42c), pressure chamber inlet/outlet B (43a, 43b, 43c), secondary circulation line (40a, 40b, 40c) and secondary circulation pump (41a, 41b, 41c). When a circuit is in absorption mode, optionally the secondary circulation loop can be activated to increase airflow within absorption/desorption tank (1) thereby increasing the amount of contact between the foul air and absorber (16). Secondary circulation loop activation comprises activating secondary circulation pump (41) such that foul air flows from pressure chamber inlet/outlet A (42) via secondary circulation line (40) to pressure chamber inlet/outlet B (43) or activating secondary circulation pump (41) such that foul air flows from pressure chamber inlet/outlet B (43) via secondary circulation line (40) to pressure chamber inlet/outlet A (42). Alternatively, secondary circulation pump (41) may transition between forward and reverse flow to cause further turbulence in absorption/desorption tank (1). Figure 56 and Figure 57 show embodiments where all pumps are circuit-specific (Figure 56) or all pumps are shared between circuits (Figure 57). Other embodiments are also possible where some pumps are circuit-specific and some are shared between circuits.

Figure 58 shows a further embodiment of Figure 43 with the secondary circulation loop being internal to the absorption/desorption tank. This approach may be applied to all other embodiments.

In a further embodiment of all figures, there may be multiple secondary circulation loops for each absorption/desorption tank, either external to the tank, internal to the tank or a combination of both.

## Claims

1. A system comprising a plurality of air purification circuits, the system comprising:
a common pollutant outlet (10), a common clean air outlet (6); and a common inlet (3);
wherein each air purification circuit comprises an absorption/desorption tank (1, 2) comprising a solid or porous absorption media (16), wherein each circuit comprises one or more valves (4, 5, 7, 8, 18, 19, 28) which allow fluid communication between the absorption/desorption tank (1) and each one of the common inlet (3), the common pollutant outlet (10), and the common clean air outlet (6) to be either opened or closed.

2. The system of Claim 1, comprising two air purification circuits:
wherein each circuit comprises an absorption/desorption tank (1, 2) comprising a solid or porous absorption media (16), wherein each absorption/desorption tank (1, 2) is connected to the common pollutant outlet (10) via a valve (8, 12), each absorption/desorption tank (1, 2) is connected to the common clean air outlet (6) via a valve (5, 11), and each absorption/desorption tank (1, 2) is connected to the common inlet (3) via a valve (4, 7);
optionally wherein the common pollutant outlet (10) comprises a pump (9), preferably a vacuum pump; and preferably wherein the solid or porous absorption media (16) is a solid CO₂ absorber.

3. The system of Claim 1, wherein each circuit comprises an inlet valve (4) which allows fluid communication from the common inlet (3) to the absorption/desorption tank (1) to be open or closed, an outlet valve (5), which allows fluid communication from the absorption/desorption tank (1) to the common clean air outlet (6) to be open or closed, and a pollutant outlet valve (8) which allows fluid communication from the absorption/desorption tank (1) to the common pollutant outlet (10) to be open or closed; and
wherein the common pollutant outlet (10) comprises a pump (9), preferably a vacuum pump, and the common inlet (3) comprises a pump (14), preferably a pressure pump or a compression pump.

4. The system of Claim 1, wherein each circuit comprises an inlet valve (4) which allows fluid communication from the common inlet (3) to the absorption/desorption tank (1) to be open or closed, and a shared outlet valve (18, 28) which is s selectively configurable to:
i) open fluid communication from the absorption/desorption tank (1) to the common clean air outlet (6), and close fluid communication from the absorption/desorption tank (1) to the common pollutant outlet (10);
ii) close fluid communication from the absorption/desorption tank (1) to the common clean air outlet (6), and open fluid communication from the absorption/desorption tank (1) to the common pollutant outlet (10); or
iii) close fluid communication from the absorption/desorption tank (1) to the common clean air outlet (6), and close fluid communication from the absorption/desorption tank (1) to the common pollutant outlet (10);
wherein the common inlet (3) comprises a pump (14), preferably a pressure pump or a compression pump; and
wherein either: the shared outlet valve (18, 28) is connected to the absorption/desorption tank (1) via a pump (23, 29), preferably a vacuum pump; or the common clean air outlet (6) and the common pollutant outlet (10) each comprise a pump (25, 26);
and optionally wherein each absorption/desorption tank (1) is connected to a common absorption/desorption tank inlet/outlet (21) which divides into connections to both the inlet valve (4) and to the shared outlet valve (18, 28).

5. The system of Claim 1, wherein each absorption/desorption tank (1) is connected to a common valve (19) via a common pump (20); wherein the common valve (19) is selectively configurable to:
i) open fluid communication from the absorption/desorption tank (1) to the common clean air outlet (6), close fluid communication from the absorption/desorption tank (1) to the common pollutant outlet (10), and close fluid communication from the common inlet (3) to the absorption/desorption tank (1);
ii) close fluid communication from the absorption/desorption tank (1) to the common clean air outlet (6), open fluid communication from the absorption/desorption tank (1) to the common pollutant outlet (10), and close fluid communication from the common inlet (3) to the absorption/desorption tank (1);
iii) close fluid communication from the absorption/desorption tank (1) to the common clean air outlet (6), close fluid communication from the absorption/desorption tank (1) to the common pollutant outlet (10), and open fluid communication from the common inlet (3) to the absorption/desorption tank (1); or
iv) close fluid communication from the absorption/desorption tank (1) to the common clean air outlet (6), close fluid communication from the absorption/desorption tank (1) to the common pollutant outlet (10), and close fluid communication from the common inlet (3) to the absorption/desorption tank (1).

6. The system of any one of the preceding claims, wherein the connection from the absorption/desorption tank (1) to the common inlet (3) divides into an inlet branch (44) and a fallback branch (45);
wherein the inlet branch (44) comprises an air inlet pump (40) for pumping air from the common inlet (3) to the absorption/desorption tank (1);
wherein the fallback branch (45) comprises a pump (42), preferably a vacuum pump, for pumping air from the absorption/desorption tank (1) to the common inlet (3); and
wherein one of:
a) each circuit comprises an inlet valve (4) at the location where the connection from the absorption/desorption tank (1), the inlet branch (44), and the fallback branch (45) converge, said inlet valve (4) being selectively configurable to i) open fluid communication from the inlet branch (44) to the absorption/desorption tank (1), and to close fluid communication from the absorption/desorption tank (1) to the fallback branch (45); ii) close fluid communication from the inlet branch (44) to the absorption/desorption tank (1), and to open fluid communication from the absorption/desorption tank (1) to the fallback branch (45); or iii) close fluid communication from the inlet branch (44) to the absorption/desorption tank (1), and to close fluid communication from the absorption/desorption tank (1) to the fallback branch (45);
b) each circuit comprises an inlet valve (4) at the location where the common inlet (3), the inlet branch (44), and the fallback branch (45) converge, said inlet valve (4) being selectively configurable to i) open fluid communication from the common inlet (3) to the inlet branch (44) and close fluid the fallback branch (45) to the common inlet (3); ii) close fluid communication from the common inlet (3) to the inlet branch (44) and open fluid communication from the fallback branch (45) to the common inlet (3); or iii) close fluid communication from the common inlet (3) to the inlet branch (44) and close fluid communication from the fallback branch (45) to the common inlet (3); or
c) wherein the inlet branch (44) comprises an inlet valve (41) being selectively configurable to be either open or closed; and wherein the fallback branch (45) comprises a fallback valve (43) being selectively configurable to be either open or closed.

7. The system of any one of the preceding claims, wherein one or more of the valves (8, 18, 19) that are selectively configurable to open or close fluid communication from the absorption/desorption tank (1) to the common pollutant outlet (10), are further selectively configurable to exclusively open fluid communication from the absorption/desorption tank (1) to a common fallback line (47);
wherein the common fallback line (47) comprises a common fallback pump (48) and a one-way fallback valve (49); and
wherein the common fallback line (47) flows into the common inlet (3).

8. A system according to Claim 1, wherein each absorption/desorption tank (1, 2) further comprises a heat exchanger (13, 14).

9. An air purification circuit comprising:
a) an absorption/desorption tank (1) comprising a solid or porous absorption media (16) and a secondary circulation loop comprising a first pressure chamber inlet/outlet (42), a second pressure chamber inlet/outlet (43), a secondary circulation line (40) and a secondary circulation pump (41);
b) a pollutant outlet (10), a clean air outlet (6), and an inlet (3); and
c) one or more valves (4, 5, 8, 18, 19, 28) which allow fluid communication between the absorption/desorption tank (1) and each one of the inlet (3), the pollutant outlet (10), and the clean air outlet (6) to be either opened or closed.

10. A system comprising a plurality of air purification circuits according to Claim 9, the system comprising: a common pollutant outlet (10), a common clean air outlet (6), and a common inlet (3); wherein the pollutant outlet (10), clean air outlet (6), and inlet (3) of each circuit are suitable for fluid communication with the common pollutant outlet (10), the common clean air outlet (6), and the common inlet (3), respectively.

11. A system according to any one of Claims 1 to 8, wherein each absorption/desorption tank (1) further comprises a secondary circulation loop comprising a first pressure chamber inlet/outlet (42), a second pressure chamber inlet/outlet (43), a secondary circulation line (40) and a secondary circulation pump (41).

12. A method of removing CO₂ from air using a system according to any one of the preceding claims, wherein each air purification circuit is operated in one of the following modes:
a) absorption mode: wherein fluid communication from the common inlet (3) to the absorption/desorption tank (1a, 1b, 1c) is open; fluid communication from the absorption/desorption tank (1a, 1b, 1c) to the common clean air outlet (6) is closed; and fluid communication from the absorption/desorption tank (1a, 1b, 1c) to the common pollutant outlet (10) is closed;
b) desorption mode: wherein fluid communication from the common inlet (3) to the absorption/desorption tank (1a, 1b, 1c) is closed; fluid communication from the absorption/desorption tank (1a, 1b, 1c) to the common clean air outlet (6) is closed; and fluid communication from the absorption/desorption tank (1a, 1b, 1c) to the common pollutant outlet (10) is open;
c) clean air discharge mode: wherein fluid communication from the common inlet (3) to the absorption/desorption tank (1a, 1b, 1c) is closed; fluid communication from the absorption/desorption tank (1a, 1b, 1c) to the common clean air outlet (6) is open; and fluid communication from the absorption/desorption tank (1a, 1b, 1c) to the common pollutant outlet (10) is closed;
d) isolated mode: wherein fluid communication from the common inlet (3) to the absorption/desorption tank (1a, 1b, 1c) is closed; fluid communication from the absorption/desorption tank (1a, 1b, 1c) to the common clean air outlet (6) is closed; and fluid communication from the absorption/desorption tank (1a, 1b, 1c) to the common pollutant outlet (10) is closed;
e) flow through mode: wherein fluid communication from the common inlet (3) to the absorption/desorption tank (1a, 1b, 1c) is open; fluid communication from the absorption/desorption tank (1a, 1b, 1c) to the common clean air outlet (6) is open; and fluid communication from the absorption/desorption tank (1a, 1b, 1c) to the common pollutant outlet (10) is closed; or
f) dwell mode: wherein fluid communication from the common inlet (3) to the absorption/desorption tank (1a, 1b, 1c) is closed; fluid communication from the absorption/desorption tank (1a, 1b, 1c) to the common clean air outlet (6) is closed; and fluid communication from the absorption/desorption tank (1a, 1b, 1c) to the common pollutant outlet (10) is closed, and wherein the pressure inside the absorption/desorption tank (1) is higher than atmospheric pressure.

13. The method of Claim 12, further comprising one or more of the following:
a) wherein the system is a system of Claim 2, and wherein one circuit is in absorption mode and wherein the other circuit is in desorption mode; preferably wherein the absorption/desorption tank (1) of the circuit in absorption mode is exposed to increased pressure, and the absorption/desorption tank (2) of the circuit in desorption mode is exposed to reduced pressure;
b) wherein desorption mode further comprises heating the solid or porous absorption media (16), and optionally wherein absorption mode further comprises cooling the solid or porous absorption media (16); preferably wherein the system is a system of Claim 9 or any claim dependent thereon;
c) wherein the system is a system of Claim 6 or Claim 7, or any claim dependent thereon, and wherein one or more of the air purification circuits is operated in absorption/desorption tank fallback mode: wherein fluid communication from the common inlet (3) to the absorption/desorption tank (1a, 1b, 1c) is closed; fluid communication from the absorption/desorption tank (1a, 1b, 1c) to the common clean air outlet (6) is closed; fluid communication from the absorption/desorption tank (1a, 1b, 1c) to the common pollutant outlet (10) is closed; and fluid communication from the absorption/desorption tank (1a, 1b, 1c) to the fallback branch (45) or fallback line (47) is open; and/or
d) wherein the system is a system of Claim 11, and wherein absorption mode and dwell mode further comprise pumping air from one part of the absorption/desorption tank (1) to another part of the same absorption/desorption tank (1) using the secondary circulation loop; preferably wherein the secondary circulation pump (41) is transitioned between forward and reverse flow.

14. A method of retrofitting a system as defined in any one of Claims 1 to 8, 10, or 11, or a circuit as defined in Claim 9, into a submarine atmospheric control system.

15. A submarine comprising one or more system as defined in any one of Claims 1 to 8, 10, or 11, or one or more circuit as defined in Claim 9.
